(19) Europäisches Patentamt
European Patent Office
Office européen des brevets

(11) EP 4 693 446 A1

(12) EUROPEAN PATENT APPLICATION
published in accordance with Art. 153(4) EPC

(43) Date of publication:
**11.02.2026 Bulletin 2026/07**

(21) Application number: **24781161.5**

(22) Date of filing: **25.03.2024**

(51) International Patent Classification (IPC):
***H01M 4/134*** *(2010.01)* ***H01M 4/1395*** *(2010.01)*
***H01M 4/38*** *(2006.01)* ***H01M 4/62*** *(2006.01)*
***H01M 4/04*** *(2006.01)* ***H01M 4/66*** *(2006.01)*
***H01M 10/0585*** *(2010.01)* ***H01M 10/052*** *(2010.01)*
***H01M 4/02*** *(2006.01)*

(52) Cooperative Patent Classification (CPC):
**H01M 4/02; H01M 4/04; H01M 4/134; H01M 4/1395; H01M 4/38; H01M 4/62; H01M 4/66; H01M 10/052; H01M 10/0585;** Y02E 60/10

(86) International application number:
**PCT/KR2024/003727**

(87) International publication number:
**WO 2024/205170 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039362**
**16.06.2023 KR 20230077735**

(71) Applicant: **SAMSUNG SDI CO., LTD.**
**Yongin-si, Gyeonggi-do 17084 (KR)**

(72) Inventors:
- **KIM, Hee Min**
  **Yongin-Si Gyeonggi-do 17084 (KR)**
- **LEE, Kang Hee**
  **Yongin-Si Gyeonggi-do 17084 (KR)**
- **BAE, Woo Jin**
  **Yongin-Si Gyeonggi-do 17084 (KR)**
- **MOON, Jong Seok**
  **Yongin-Si Gyeonggi-do 17084 (KR)**
- **WOO, Hyun Sik**
  **Yongin-Si Gyeonggi-do 17084 (KR)**
- **PARK, Jong Seok**
  **Yongin-Si Gyeonggi-do 17084 (KR)**
- **PARK, Jin Hwan**
  **Yongin-Si Gyeonggi-do 17084 (KR)**

(74) Representative: **Michalski Hüttermann & Partner Patentanwälte mbB**
**Kaistraße 16A**
**40221 Düsseldorf (DE)**

# (54) NEGATIVE ELECTRODE FOR LITHIUM METAL BATTERY, LITHIUM METAL BATTERY COMPRISING SAME, AND METHOD FOR MANUFACTURING NEGATIVE ELECTRODE FOR LITHIUM METAL BATTERY

(57) Provided are an anode for a lithium metal battery, a lithium metal battery including the same, and a method of preparing the anode for a lithium metal battery, wherein the anode includes an anode current collector and a first metal-containing coating layer, wherein the first metal-containing coating layer contains a material including an organic-based material and a first metal capable of forming an alloy or compound with lithium, and an amine group is present on a surface of the organic-based material.

FIG. 1

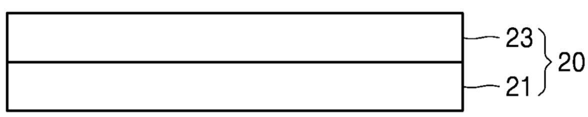


EP 4 693 446 A1

## Description

### Technical Field

The present disclosure relates to an anode for a lithium metal battery, a lithium metal battery including the same, and a method of preparing the anode for a lithium metal battery.

### Background Art

Currently commercially available lithium batteries mainly use carbon-based anode active materials such as graphite. The volume of carbon-based anode active materials does not change during charging or discharging, and thus the stability of lithium batteries is high. However, carbon-based anode active materials have low capacity, and thus anode active materials having higher capacity than carbon-based anode active materials are required.

Lithium metal, which has much higher theoretical electric capacity than carbon-based anode electrode materials, may be used as an anode electrode material. Due to side reactions between lithium metal and an electrolyte during charging/discharging, dendrites form on the surface of the lithium metal and grow to cause a short circuit between a cathode and an anode. As a result, the lifespan characteristics of lithium metal batteries including lithium metal deteriorate.

### Disclosure of Invention

### Technical Problem

An aspect is to provide an anode for a lithium metal battery, which has a novel structure.

Another aspect is to provide a lithium metal battery having improved lifespan characteristics by including an anode with a novel structure.

Another aspect is to provide a method of preparing an anode for a lithium metal battery, which has a new structure.

### SOLUTION TO PROBLEM

According to an embodiment, provided is an anode for a lithium metal battery, the anode including an anode current collector, and a first metal-containing coating layer, wherein the first metal-containing coating layer contains a material including an organic-based material and a first metal capable of forming an alloy or compound with lithium, and an amine group is present on the organic-based material.

The amine group is a functional group derived from ethylenediamine, hydrazine, an ethylenediaminetetraacetic acid, methylamine, diethylamine, monoethylamine, trimethylamine, ethylenediamine, aniline, pyridine, or a combination thereof.

The organic-based material is a by-product of an electroless plating reaction of a composition including a first metal-containing salt and an amine group-containing substance.

According to another embodiment,
provided is a lithium metal battery including a cathode, the anode, and an electrolyte included therebetween.

According to another embodiment,

provided is a method of preparing an anode for a lithium metal battery, the method including preparing an anode current collector, and forming, on the anode current collector, a first metal-containing coating layer containing a material comprising a first metal and an organic-based material by performing, on the anode current collector, an electroless plating process using a composition comprising a first metal-containing salt and an amine group-containing substance, thereby preparing the anode for a lithium metal battery,
wherein an amine group is present on a surface of the organic-based material.

### Advantageous Effects of Invention

According to an aspect, by employing an anode for a lithium metal battery, which has a novel structure, there may be provided a lithium metal battery in which dendrite formation is suppressed, deterioration of an anode active material layer is prevented, and cycle characteristics are improved.

## BRIEF DESCRIPTION OF DRAWINGS

FIG. 1 is a cross-sectional view of an anode according to an exemplary embodiment.
FIG. 2 is a cross-sectional view of an anode according to another exemplary embodiment.
FIG. 3A shows X-ray photoelectron spectroscopy (XPS) analysis results of Ag3d of anodes prepared in Example 2, Example 5, Comparative Example 1, and Comparative Example 3.
FIG. 3B shows XPS analysis results of N1s of the anodes prepared in Example 2, Example 5, Comparative Example 1, and Comparative Example 3.
FIG. 3C shows XPS analysis results of C1s of the anodes prepared in Example 2, Example 5, Comparative Example 1, and Comparative Example 3.
FIG. 4 shows X-ray diffraction analysis results of the anodes prepared in Example 2, Comparative Example 1, and Comparative Example 3.
FIG. 5A is a scanning electron microscope image of the anode prepared in Example 1.
FIG. 5B is a scanning electron microscope image of the anode prepared in Comparative Example 1.
FIG. 6 is a graph showing a voltage change according to capacity in the anodes prepared in Example 1 and Comparative Example 1.
FIG. 7 is a graph showing lifespan characteristics of lithium metal batteries of Manufacturing Example 1 and Comparative Manufacturing Example 1, which respectively employ the anodes prepared in Example 1 and Comparative Example 1.
FIG. 8 shows a voltage change over time in coin half-cells including lithium metal electrodes and anodes prepared according to Examples 1 to 3 and Comparative Examples 1 to 3.
FIG. 9 is a schematic view of a lithium metal battery according to an embodiment.
FIG. 10 is a schematic view of a lithium metal battery according to another embodiment.
FIG. 11 is a schematic view of a lithium metal battery according to another embodiment.
FIGS. 12 and 13 are cross-sectional views of a lithium metal battery including a solid electrolyte layer, according to another embodiment.

## <List of Reference Numerals for Major Elements>

| | | | |
|---|---|---|---|
| 1: | lithium battery | 2, 20: | anode |
| 3, | 10:cathode | 4: | separator |
| 5: | battery case | 6: | cap assembly |
| 7: | battery structure | 8: | electrode tab |
| 11: | cathode current collector | 12: | cathode active material layer |
| 21: | anode current collector | 22: | anode active material layer |
| 23: | protective layer | 30: | solid electrolyte layer |

## Best Mode for Carrying out the Invention

Hereinafter, as the present inventive concept allows for various changes and numerous embodiments, specific embodiments will be illustrated in the drawings and described in detail in the written description. However, this is not intended to limit the present inventive concept to particular modes of practice, and it is to be appreciated that all changes, equivalents, and substitutes that do not depart from the spirit and technical scope are encompassed in the present inventive concept.

The terms used herein are merely used to describe specific embodiments and are not intended to limit the present inventive concept. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" used herein may be interpreted as "and" or "or" according to the context.

In the drawings, the thicknesses of layers and regions are exaggerated or reduced for clarity. Like reference numerals in the drawings denote like elements throughout the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another. Components having substantially the same functional configuration in the present specification and drawings are denoted by the same reference numerals, and redundant descriptions thereof will be omitted.

As used herein, the term "particle diameter" of particles refers to an average diameter when particles are spherical and refers to an average major axis length when particles are non-spherical. A particle diameter of particles may be measured by using a particle size analyzer (PSA). A "particle diameter" is, for example, an average particle diameter. An average particle diameter refers to, for example, a median particle diameter (D50). The median particle diameter (D50) is a particle size corresponding to a 50 % cumulative volume when a particle size distribution measured through a laser diffraction method is calculated from particles having a smaller particle size. An average particle diameter and average major axis length of particles may be measured by using a scanning electron microscope. When a particle size is measured by using a scanning electron microscope, the particle size is determined as an average value of 30 or more randomly extracted particles with a size of 1 μm or more excluding fine particles.

The term "metal" as used herein includes all of metals and metalloids such as silicon and germanium in an elemental or ionic state.

The term "alloy" as used herein refers to a mixture of two or more metals.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to a cathode active material or an anode active material.

The terms "delithiate" and "delithiating" as used herein refer to a process of removing lithium from a cathode active material or an anode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

In the present disclosure, a thickness refers to an average thickness.

Hereinafter, an anode for a lithium metal battery, a lithium metal battery including the same, and a method of preparing the anode for a lithium metal battery according to exemplary embodiments will be described in more detail.

An anode for a lithium metal battery according to an embodiment includes an anode current collector, and a first metal-containing coating layer, wherein the first metal-containing coating layer contains a material including an organic-based material and a first metal capable of forming an alloy or compound with lithium, and an amine group is present on a surface of the organic-based material.

In the present specification, an amine group refers to a functional group derived from amine, and an amine is a base and refers to an organic compound and a functional group in which a nitrogen atom has an unshared electron pair. An amine group refers to, for example, i) $-NH_2$, or ii) an amine group derived from ethylenediamine, hydrazine, and an ethylenediaminetetraacetic acid.

In the present specification, a material including a first metal and an organic-based material includes a mixture of a first metal and an organic-based material, a composite of a first metal and an organic-based material, or a combination thereof.

During a charging or discharging process of a lithium metal battery using a lithium metal as an anode active material, a lithium-containing metal layer is precipitated and dissolved between an anode current collector and an electrolyte layer. As charging or discharging of the lithium metal battery is repeated, the lithium-containing metal layer includes impurities remaining in an electrode, decomposition products of an electrolyte, and the like. Therefore, the lithium-containing metal layer includes such impurities, and thus a surface of the lithium-containing metal layer becomes rough and hard. Lithium dendrites are precipitated on the lithium-containing metal layer having such a rough surface. These lithium dendrites may continue to grow during a charging or discharging process, thereby causing a short circuit

between a cathode and an anode. Due to non-unform growth of lithium dendrites on an anode during charging, damage to a cell easily occurs, and volume expansion also occurs severely, which makes long-term driving difficult.

Since the first metal-containing coating layer includes the material containing the organic-based material and the first metal forming an alloy or compound with lithium, and the amine group is present on the surface of the organic-based material, the anode according to an embodiment may have lithiophilicity characteristics to exhibit a uniform lithium deposition effect. Materials with lithiophilicity, such as amine groups, may assist in uniformly depositing Li on a surface of an anode by reducing a nucleation barrier during an initial Li deposition process, thereby suppressing dendrite formation to prevent a short circuit.

The material containing the first metal and the organic-based material of the first metal-containing coating layer is used as a lithiophilicity seed on an anode current collector. The first metal-containing coating layer serves as a lithium deposition inducing layer, thereby allowing lithium to be uniformly deposited on an anode current collector and suppressing the formation of lithium dendrites, and the occurrence of a short circuit in a lithium metal battery employing such an anode is suppressed, thereby improving cycle characteristics.

The material, which includes the first metal and the organic-based material and in which the amine group is present on the surface of the organic-based material, is an electroless plating product of a composition containing the first metal salt and the amine group-containing substance. The first metal-containing coating layer may be formed through wet coating.

The first metal is at least one selected from silver (Ag), gold (Au), bismuth (Bi), tin (Sn), zinc (Zn), lead (Pb), palladium (Pd), platinum (Pt), antimony (Sb), rhodium (Rh), nickel (Ni), cobalt (Co), zinc (Zn), ruthenium (Ru), copper (Cu), silicon (Si), chromium (Cr), and manganese (Mn).

The composition may further contain vanillin. Vanillin is a surface stabilizing agent. When the composition further contains vanillin, the surface characteristics of a coating layer may be controlled so that a more uniform first metal-containing coating layer may be formed on an anode current collector, and dendrites may be uniformly formed when lithium is precipitated.

The organic-based material is a by-product of an electroless plating reaction of the composition including the first metal-containing salt and the amine group-containing substance. Here, the electroless plating reaction by-product refers to a remaining reaction product excluding the first metal obtained as a result of an electroless plating reaction, a residue of the amine group-containing substance, some reaction by-products, or a combination thereof. For example, the electroless plating reaction by-product refers to at least one selected from an amine group-containing compound such as ethylenediamine, vanillin, and/or a material derived therefrom. The term "derivative" herein includes any residual, decomposed, or transformed form.

The amine group is a functional group derived from ethylenediamine, hydrazine, an ethylenediaminetetraacetic acid, methylamine, diethylamine, monoethylamine, trimethylamine, ethylenediamine, aniline, pyridine, or a combination thereof.

In the first metal-containing coating layer, a content of the first metal is in a range of 95 parts by weight to 99.9 parts by weight, 96 parts by weight to 99.9 parts by weight, 97 parts by weight to 99.9 parts by weight, 97.5 parts by weight to 99.9 parts by weight, 98 parts by weight to 99.9 parts by weight, 98.5 parts by weight to 99.9 parts by weight, or 99 parts by weight to 99.9 parts by weight with respect to 100 parts by weight of the total weight of the first metal-containing coating layer. When the content of the first metal is in the above range, there may be provided a lithium metal battery in which dendrite formation is suppressed, deterioration of an anode active material layer is prevented, and cycle characteristics are improved.

The presence of the organic-based material in the first metal-containing coating layer may be confirmed through nuclear magnetic resonance (NMR) analysis, infrared analysis, and X-ray photoelectron spectroscopy (XPS) analysis, and a content of the organic-based material may be confirmed through mass spectrometer analysis and inductively coupled plasma atomic emission spectroscopy (ICP-AES) analysis. The presence of the first metal may be confirmed through XPS analysis.

In the composition including the first metal-containing salt and the amine group-containing substance, a content of the amine group-containing substance is in a range of 110 parts by weight to 220 parts by weight, 120 parts by weight to 215 parts by weight, 130 parts by weight to 210 parts by weight, 140 parts by weight to 205 parts by weight, 150 parts by weight to 200 parts by weight, 155 parts by weight to 195 parts by weight, or 160 parts by weight to 190 parts by weight with respect to 100 parts by weight of the first metal-containing salt. When the content of the amine group-containing substance is in the above range, an anode active material layer in which dendrite formation is suppressed and deterioration is prevented may be prepared.

Referring to FIG. 1, an anode 20 includes an anode current collector 21, and a first metal-containing coating layer 23 disposed on the anode current collector 21 and containing a first metal and an organic-based material.

As can be seen in FIG. 1, the anode does not include an anode active material layer. After the anode 20 that does not include an anode active material layer is introduced into a lithium battery together with a cathode and an electrolyte, through charging, a lithium metal may be precipitated between the anode current collector 21 and the first metal-containing

coating layer 23 so that the anode 20 may include an anode active material layer. The anode active material layer may be a plated lithium layer.

An anode 20 of FIG. 2 may include an anode active material layer 22 disposed between an anode current collector 21 and a first metal-containing coating layer 23, and the anode active material layer 22 may include a lithium metal or a lithium alloy.

A C-$NH_2$ peak (first peak) obtained through X-ray spectroscopy analysis of the first metal-containing coating layer is present at a binding energy of 397 eV to 403 eV, and a full width at half maximum of the peak is in a range of 2 eV to 3 eV.

An intensity ratio of a second peak and the first peak which is a C-$NH_2$ peak is in a range of 1:4 to 1:6, 1:4.5 to 1:5.5, or 1:5 to 1:5.5, wherein the second peak and the first peak are obtained through X-ray spectroscopy analysis of the first metal-containing coating layer and appear at a binding energy of 398 eV to 401 eV. The second peak is, for example, a Ag-N peak. From such XPS analysis results, it may be confirmed that an amine group is present due to an organic-based material.

According to X-ray spectroscopy analysis of the first metal-containing coating layer, as shown in FIG. 3B, a peak related to -$NO_3$ appears at a binding energy of 406 eV to 408 eV. A peak related to $NH_4^+$ appears at a binding energy of 400 eV to 402 eV.

In an X-ray diffraction analysis spectrum of the first metal-containing coating layer, peaks corresponding to a Ag(111) crystal plane, Ag(200), and Ag(220), and peaks corresponding to copper crystal planes are observed. Here, the peak corresponding to the Ag(111) crystal plane appears at a diffraction angle $2\theta$ of 37.5° to 39°, and the peak corresponding to Ag(200) appears at a diffraction angle $2\theta$ of 42° to 44°. The peak corresponding to Ag(220) appears at a diffraction angle $2\theta$ of 63.5° to 65.5°. The peaks corresponding to the Cu crystal planes appear at diffraction angles $2\theta$ of 42° to 45°, 48° to 52°, and 73° to 75°.

A thickness of the first metal-containing coating layer is in a range of 1 $\mu$m to 80 $\mu$m, 2 $\mu$m to 75 $\mu$m, 3 $\mu$m to 60 $\mu$m, or 5 $\mu$m to 50 $\mu$m. When the thickness of the first metal-containing coating layer is in the above range, there may be provided a lithium metal battery in which dendrite formation is suppressed, deterioration of an anode active material layer is prevented, and cycle characteristics are improved.

In the first metal-containing material of the first metal-containing coating layer according to an embodiment, a content of the first metal is in a range of 5 parts by weight to 60 parts by weight, 10 parts by weight to 55 parts by weight, 15 parts by weight to 50 parts by weight, 15 parts by weight to 48 parts by weight, 15 parts by weight to 45 parts by weight, 15 parts by weight to 40 parts by weight, 20 parts by weight to 37 parts by weight, or 25 parts by weight to 35 parts by weight with respect to 100 parts by weight of a carbon-based material. When the content of the first metal is in the above range, the cycle characteristics of a lithium metal battery containing the first metal-containing coating layer are improved.

A thickness of the first metal-containing coating layer may be in a range of 1 $\mu$m to 20 $\mu$m, 1 $\mu$m to 15 $\mu$m, 2 $\mu$m to 10 $\mu$m, or 3 $\mu$m to 7 $\mu$m. When the thickness of the first metal-containing coating layer is in the above range, the cycle characteristics of a lithium metal battery containing the first metal-containing coating layer are improved without a decrease in energy density.

The anode active material layer is further included between the anode current collector and the first metal-containing coating layer, and a thickness of the anode active material layer is in a range of 0.1 $\mu$m to 80 $\mu$m, 1 $\mu$m to 50 $\mu$m, or 1 $\mu$m to 20 $\mu$m. The anode active material layer includes lithium metal foil, lithium metal powder, lithium alloy foil, lithium alloy powder, or a combination thereof, and the lithium alloy contains lithium and a second metal.

The second metal is indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, bismuth, tantalum, hafnium, barium, vanadium, strontium, lanthanum, or a combination thereof.

The anode active material layer 22 may include, for example, lithium foil, a lithium powder, or a combination thereof. The lithium foil may include, for example, lithium metal foil, lithium alloy foil, or a combination thereof. The lithium powder may include lithium metal powder, lithium alloy powder, or a combination thereof. The lithium alloy is an alloy of lithium and a metal, which is alloyable with lithium, other than lithium. For example, the lithium alloy is a lithium-silver alloy, a lithium-zinc alloy, a lithium-magnesium alloy, a lithium-tin alloy, or the like. An anode active material layer including lithium metal foil may be, for example, a lithium metal layer. An anode active material layer including lithium alloy foil may be, for example, a lithium metal layer. An anode active material layer including lithium metal powder and/or lithium alloy powder may be introduced by coating an anode current collector with a slurry including a lithium powder, a binder, and the like. The binder may be, for example, a fluorine-based binder such as polyvinylidene fluoride (PVDF). The anode active material layer may not include a carbon-based anode active material. Thus, the anode active material layer may consist of a metal-based anode active material.

Referring to FIGS. 1 and 2, the anode 20 for a lithium metal battery includes the anode current collector 21.

The anode current collector 21 consists of a material that does not react with lithium, that is, a material that does not form both an alloy and a compound with lithium. Examples of a material constituting the anode current collector include

copper (Cu), stainless steel, titanium (Ti), iron (Fe), cobalt (Co), nickel (Ni), and the like, but one or more embodiments are not necessarily limited thereto. Any material may be used along as the material is used as an electrode current collector in the art. The anode current collector may consist of one selected from the above-described metals or an alloy of two or more metals or a coating material. The anode current collector is, for example, in the form of a plate or foil.

The anode current collector may include, for example, a base film and a metal layer disposed on one side or both sides of the base film.

The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film may include an insulating thermoplastic polymer, and thus when a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. A metal chip may be disposed on the metal layer and then welded to a lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of 1 μm to μm 50 μm, 1.5 μm to 50 μm, 1.5 μm to 40 μm, or 1 μm to 30 μm. The base film may have a thickness in such a range, and thus a weight of an electrode assembly may be more effectively reduced. A melting point of the base film may be, for example, in a range of 100 °C to 300 °C, 100 °C to 250 °C, or 100 °C to 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of 0.01 μm to 3 μm, 0.1 μm to 3 μm, 0.1 μm to 2 μm, or 0.1 μm to 1 μm. The metal layer may have a thickness in such a range, and thus the stability of an electrode assembly may be secured while conductivity is maintained. A thickness of the metal chip may be, for example, in a range of 2 μm to 10 μm, 2 μm to 7 μm, or 4 μm to 6 μm. The metal chip may have a thickness in such a range, and thus the metal layer may be more easily connected to the lead tab. The anode current collector 21 may have such a structure, and thus a weight of an electrode may be reduced, thereby improving an energy density.

The anode 20 for a lithium metal battery according to an embodiment may optionally further include an anode interlayer disposed between the protective layer 23 and the anode active material layer 22. The anode 20 may additionally include the anode interlayer, and thus the generation and/or growth of lithium dendrites at the anode 20 may be more effectively suppressed. The anode interlayer may be omitted.

The anode interlayer may include, for example, an anode active material and a binder. The anode active material is an anode material that may be lithiated and delithiated. The anode active material included in the anode interlayer has, for example, a particle form. An average particle diameter of the anode active material having a particle form is, for example, in a range of 10 nm to 4 μm, 10 nm to 1 μm, 10 nm to 500 nm, 10 nm to 100 nm, or 20 nm to 80 nm. Since the anode active material has an average particle diameter in such a range, reversible precipitation and/or dissolution of lithium may be more easily performed during charging/discharging. The average particle diameter of the anode active material is, for example, a median diameter (D50) measured by using a laser type particle size distribution meter.

The anode active material included in the anode interlayer may include, for example, at least one selected from a carbon-based anode active material and a metal or metalloid anode active material. The carbon-based anode active material may be, for example, amorphous carbon. Examples of the carbon-based anode active material include carbon black (CB), Denka black, acetylene black (AB), furnace black (FB), Ketjen black (KB), graphene, and the like, but one or more embodiments are not necessarily limited thereto. Any material may be used as long as the material is classified as amorphous carbon in the art. The amorphous carbon is carbon that has no crystallinity or very low crystallinity and is distinguished from crystalline carbon or graphite-based carbon. The metal or metalloid anode active material includes at least one selected from the group consisting of gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be used as long as the material is used as a metal anode active material or a metalloid anode active material which forms an alloy or compound with lithium in the art. For example, nickel (Ni) does not form an alloy with lithium and thus is not a metal anode active material in the present specification. The anode interlayer includes one type of anode active material among such anode active materials or a mixture of a plurality of different anode active materials. The anode interlayer may include, for example, a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). A mixing ratio of the mixture may be, for example, a weight ratio of 10:1 to 1:2, 10:1 to 1:1, 7:1 to 1:1, 5:1 to 1:1, or 4:1 to 2:1. The anode active material included in the anode interlayer may include, for example, a mixture of first particles consisting of amorphous carbon and second particles consisting of metal or metalloid. Examples of the metal include, for example, gold (Au), platinum (Pt), palladium (Pd), silicon (Si), silver (Ag), aluminum (Al), bismuth (Bi), tin (Sn), zinc (Zn), and the like. A content

of the second particles is in a range of 8 wt% to 60 wt%, 10 wt% to 50 wt%, 15 wt% to 40 wt%, or 20 wt% to 30 wt% with respect to the total weight of the mixture. Since the second particles have a content in such a range, for example, the cycle characteristics of a lithium battery are further improved.

The binder included in the anode interlayer includes, for example, styrenebutadiene rubber (SBR), polytetrafluoroethylene, PVDF, PE, a vinylidene fluoride/hexafluoropropylene copolymer, polyacrylonitrile, poly(methylmethacrylate), or the like, but one or more embodiments are not necessarily limited thereto. Any material may be used as long as the material may be used as a binder in the art. The binder may be provided as a single binder or a plurality of different binders. When the anode interlayer does not include a binder, the anode interlayer may be easily separated from the protective layer 23 or the anode current collector 21. A content of the binder included in the anode interlayer may be, for example, in a range of 1 wt% to 20 wt% with respect to the total weight of the anode interlayer.

A thickness of the anode interlayer may be, for example, in a range of 1 μm to 20 μm, 1 μm to 15 μm, 2 μm to 10 μm, or 3 μm to 7 μm. The thickness of the anode interlayer may be, for example, in a range of 1 % to 50 %, 1 % to 30 %, 1 % to 10 %, or 1 % to 5 % of a thickness of a cathode active material layer. When the anode interlayer is excessively thin, lithium dendrites formed between the anode interlayer and the anode current collector may collapse the anode interlayer, which may make it difficult to improve the cycle characteristics of a lithium battery. When the thickness of the anode interlayer excessively increases, the energy density of a lithium battery employing the anode 20 may decrease, and cycle characteristics may be difficult to improve.

When the thickness of the anode interlayer decreases, for example, a charge capacity of the anode interlayer also decreases. The charge capacity of the anode interlayer may be, for example, in a range of 0.1 % to 50 %, 1 % to 30 %, 1 % to 10 %, 1 % to 5 %, or 1 % to 2 % of charge capacity. When the charge capacity of the anode interlayer is excessively low, lithium dendrites formed between the anode interlayer and the anode current collector may collapse the anode interlayer, which may make it difficult to improve the cycle characteristics of a lithium battery. When the charge capacity of the anode interlayer excessively increases, the energy density of a lithium battery employing the anode 20 may decrease, and cycle characteristics may be difficult to improve. A charge capacity of the cathode active material layer is obtained by multiplying a charge capacity density (mAh/g) of a cathode active material by a mass of the cathode active material in the cathode active material layer. When various types of cathode active materials are used, a value of charge capacity density×mass is calculated for each cathode active material, and the sum of the values is the charge capacity of the cathode active material layer. The charge capacity of the anode interlayer is also calculated in the same way. That is, the charge capacity of the anode interlayer is obtained by multiplying a charge capacity density (mAh/g) of an anode active material by a mass of the anode active material in the anode interlayer. When various types of anode active materials are used, a value of charge capacity density×mass is calculated for each anode active material, and the sum of the values is the charge capacity of the anode interlayer. Here, the charge capacity densities of the cathode active material and the anode active material are capacities estimated by using a half-cell using a lithium metal as a counter electrode. The charge capacities of the cathode active material layer and the anode interlayer are directly measured by measuring a charge capacity by using a half-cell. When the measured charge capacity is divided by a mass of each active material, a charge capacity density is obtained. Alternatively, the charge capacities of the cathode active material layer and the anode interlayer may be initial charge capacities measured during charging of a 1$^{st}$ cycle.

[Lithium metal battery]

A lithium metal battery according to an embodiment includes a cathode, an anode according to an embodiment, and an electrolyte disposed between the cathode and the anode. Since the lithium metal includes the above-described anode, improved capacity and excellent lifespan characteristics may be provided at the same time. The lithium metal battery may be, for example, a lithium primary battery, a lithium secondary battery, a lithium-sulfur battery, a lithium-air battery, or the like but is not limited thereto. Any lithium metal battery may be used as long as the lithium metal battery is used in the art.

For example, the lithium metal battery is manufactured through the following exemplary method, but one or more embodiments are not necessarily limited thereto. A method is adjusted according to required conditions.

(Anode)

The anode according to an embodiment is used.

(Cathode)

First, a cathode active material, a conductive agent, a binder, and a solvent are mixed to prepare a cathode active material composition. The prepared cathode electrode active material composition is applied directly on an aluminum current collector and dried to prepare a cathode plate on which a cathode active material layer is formed. Alternatively, the

cathode active material composition is cast on a separate support, and then a film obtained by being peeled off of the support is laminated on the aluminum current collector to prepare a cathode plate on which a cathode active material layer is formed.

As the cathode active material, any material may be used without limitation as long as the material is a lithium-containing metal oxide and is commonly used in the art. For example, the cathode active material may include at least one composite oxide of lithium and a metal selected from cobalt, manganese, nickel, and a combination thereof. A specific example of the cathode active material may include a compound represented by any one of formulas of $Li_aA_{1-b}BD_2$, wherein $0.90 \le a \le 1$ and $0 \le b \le 0.5$; $Li_aE_{1-b}B_bO_{2-c}D_c$, wherein $0.90 \le a \le 1$, $0 \le b \le 0.5$, and $0 \le c \le 0.05$; $LiE_{2-b}B_bO_{4-c}D_c$, wherein $0 \le b \le 0.5$ and $0 \le c \le 0.05$; $Li_aNi_{1-b-c}Co_bB_cD_\alpha$, wherein $0.90 \le a \le 1$, $0 \le b \le 0.5$, $0 \le c \le 0.05$, and $0 < \alpha \le 2$; $Li_aNi_{1-b-c}Co_bB_cO_{2-\alpha}F_\alpha$, wherein $0.90 \le a \le 1$, $0 \le b \le 0.5$, $0 \le c \le 0.05$, and $0 < \alpha < 2$; $Li_aNi_{1-b-c}Co_bB_cO_{2-\alpha}F_2$, wherein $0.90 \le a \le 1$, $0 \le b \le 0.5$, $0 \le c \le 0.05$, and $0 < \alpha < 2$; $Li_aNi_{1-b-c}Mn_bB_cD_\alpha$, wherein $0.90 \le a \le 1$, $0 \le b \le 0.5$, $0 \le c \le 0.05$, and $0 < \alpha \le 2$; $Li_aNi_{1-b-c}Mn_bB_cO_{2-\alpha}F_\alpha$, wherein $0.90 \le a \le 1$, $0 \le b \le 0.5$, $0 \le c \le 0.05$, and $0 < \alpha < 2$; $Li_aNi_{1-b-c}Mn_bB_cO_{2-\alpha}F_2$, wherein $0.90 \le a \le 1$, $0 \le b \le 0.5$, $0 \le c \le 0.05$, and $0 < \alpha < 2$; $Li_aNi_bE_cG_dO_2$, wherein $0.90 \le a \le 1$, $0 \le b \le 0.9$, and $0 \le c \le 0.5$, and $0.001 \le d \le 0.1$; $Li_aNi_bCo_cMn_dGeO_2$, wherein $0.90 \le a \le 1$, $0 \le b \le 0.9$, $0 \le c \le 0.5$, $0 \le d \le 0.5$, and $0.001 \le e \le 0.1$; $Li_aNiG_bO_2$, wherein $0.90 \le a \le 1$ and $0.001 \le b \le 0.1$; $Li_aCoG_bO_2$, wherein $0.90 \le a \le 1$ and $0.001 \le b \le 0.1$; $Li_aMnG_bO_2$, wherein $0.90 \le a \le 1$ and $0.001 \le b \le 0.1$; $Li_aMn_2G_bO_4$, wherein $0.90 \le a \le 1$ and $0.001 \le b \le 0.1$; $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the formulas representing the above-described compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound in which a coating layer is added to a surface of the above-described compound may also be used, and a mixture of the above-described compound and a compound to which a coating layer is added may also be used. The coating layer added to the surface of the above-described compound includes, for example, a coating element compound of an oxide or a hydroxide of a coating element, an oxyhydroxide of a coating element, an oxycarbonate of a coating element, or a hydroxycarbonate of a coating element. A compound constituting the coating layer is amorphous or crystalline. The coating element included in the coating layer includes Mg, Al, Co, K, Na, Ca, Si, Ti, V, Sn, Ge, Ga, B, As, Zr, or a mixture thereof. A method of forming the coating layer is selected within a range that does not adversely affect the physical properties of a cathode active material. A coating method includes, for example, spray coating, dipping, or the like. A specific coating method may be well understood by those skilled in the art, and thus a detailed description thereof will be omitted.

The cathode active material is, for example, $Li_aNi_xCo_yM_zO_{2-b}A_b$, wherein $1.0 \le a \le 1.2$, $0 \le b \le 0.2$, $0.8 \le x < 1$, $0 < y \le 0.3$, $0 < z \le 0.3$, $x+y+z=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof; $LiNi_xCo_yMn_zO_2$, wherein $0.8 \le x \le 0.95$, $0 \le y \le 0.2$, $0 < z \le 0.2$, and $x+y+z=1$; $LiNi_xCo_yAl_zO_2$, wherein $0.8 \le x \le 0.95$, $0 \le y \le 0.2$, $0 < z \le 0.2$, and $x+y+z=1$; $LiNi_xCo_yMn_zAl_wO_2$, wherein $0.8 \le x \le 0.95$, $0 \le y \le 0.2$, $0 < z \le 0.2$, $0 < w \le 0.2$, and $x+y+z+w=1$; $Li_aCo_xM_yO_{2-b}A_b$, wherein $1.0 \le a \le 1.2$, $0 \le b \le 0.2$, $0.9 \le x \le 1$, $0 \le y \le 0.1$, $x+y=1$, M is manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and A is F, S, Cl, Br, or a combination thereof; $Li_aNi_xMn_yM'_zO_{2-b}A_b$, wherein $1.0 \le a \le 1.2$, $0 \le b \le 0.2$, $0 < x \le 0.3$, $0.5 \le y < 1$, $0 < z \le 0.3$, $x+y+z=1$, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof; $Li_aM1_xM2_yPO_{4-b}X_b$, wherein $0.90 \le a \le 1.1$, $0 \le x \le 0.9$, $0 \le y \le 0.5$, $0.9 < x+y < 1.1$, $0 \le b \le 2$, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof; or $Li_aM3_zPO_4$, wherein $0.90 \le a \le 1.1$, $0.9 \le z \le 1.1$, and M3 is chromium (Cr), manganese (Mn), iron (Fe), cobalt (Co), nickel (Ni), copper (Cu), zirconium (Zr), or a combination thereof.

The cathode active material may be a lithium-containing sulfide-based active material. For example, the cathode active material includes $Li_2S_n$ ($n \ge 1$), a composite containing $Li_2S_n$ ($n \ge 1$), or a combination thereof.

The composite containing $Li_2S_n$ ($n \ge 1$) may include a composite of $Li_2S$ and carbon, a composite of $Li_2S$, carbon, and a solid electrolyte, a composite of $Li_2S$ and a solid electrolyte, or a combination thereof.

Examples of the conductive agent include CB, graphite particles, natural graphite, artificial graphite, AC, KB, or carbon fiber; carbon nanotubes; a metal powder, metal fiber, or a metal tube of copper, nickel, aluminum, or silver; and a conductive polymer such as a polyphenylene derivative, but one or more embodiments are not limited thereto. Any material may be used as long as the material is used a conductive material in the art. Alternatively, the cathode may not include, for example, a separate conductive material.

Examples of the binder include a vinylidene fluoride/hexafluoropropylene copolymer, PVDF, polyacrylonitrile, poly(methylmethacrylate), polytetrafluoroethylene (PTFE), a mixture of the above polymers, an SBR-based polymer, and the like. Example of the solvent include N-methylpyrrolidone (NMP), acetone, water, and the like, but one or more embodiments are not necessarily limited thereto. Any material may be used as long as the material is used in the art.

A plasticizer or a pore former may be further added to the cathode active material composition to form pores in an electrode plate.

Contents of the cathode active material, the conductive agent, the binder, and the solvent used in the cathode are at levels commonly used in a lithium battery. According to the use and configuration of a lithium battery, one or more of the conductive material, the binder, and the solvent may be omitted.

A content of the binder included in the cathode may be in a range of 0.1 wt% to 10 wt% or 0.1 wt% to 5 wt% with respect to the total weight of the cathode active material layer. A content of the cathode active material included in the cathode may be in a range of 80 wt% to 99 wt%, 90 wt% to 99 wt%, or 95 wt% to 99 wt% with respect to the total weight of the cathode active material layer.

The cathode current collector is provided as a plate, foil, or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. A thickness of the cathode current collector is, for example, in a range of 1 μm to 100 μm, 1 μm to 50 μm, 5 μm to 25 μm, or 10 μm to 20 μm.

The cathode current collector may include, for example, a base film and a metal layer disposed on one side or both sides of the base film. The base film may include, for example, a polymer. The polymer may be, for example, a thermoplastic polymer. The polymer may include, for example, PET, PE, PP, PBT, PI, or a combination thereof. The base film may be, for example, an insulator. The base film may include an insulating thermoplastic polymer, and thus when a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may additionally include a metal chip and/or a lead tab. For more specific contents of the base film, the metal layer, the metal chip, and the lead tab of the cathode current collector, reference is made to an anode current collector to be described below. Since the cathode current collector has such a structure, a weight of an electrode may be reduced, thereby improving an energy density.

(Separator)

Next, a separator to be inserted between the cathode and the anode is prepared.

As the separator, any separator may be used as long as the separator is commonly used in a lithium battery. For example, a separator having low resistance to the movement of ions in an electrolyte as well as an excellent electrolyte impregnation ability is used. For example, the separator includes at least one selected from glass fiber, polyester, Teflon, PE, PP, PTFE, and a combination thereof and is in the form of nonwoven fabric or woven fabric. For example, a windable separator including PE, PP, or the like is used in a lithium ion battery, and a separator having an excellent electrolyte impregnation ability is used in a lithium ion polymer battery.

The separator is prepared through the following exemplary method, but one or more embodiments are not necessarily limited to such a method. A method is adjusted according to required conditions.

First, a polymer resin, a filler, and a solvent are mixed to prepare a separator composition. The separator composition is applied directly on an electrode and dried to form the separator. Alternatively, the separator composition is cast on a support, and then a separator film peeled off of the support is laminated on an electrode to form the separator.

A polymer used for preparing the separator is not particularly limited, and any material may be used as long as the material is used in a binding material of an electrode plate. For example, the polymer includes a vinylidene fluoride/hexafluoropropylene copolymer, PVDF, polyacrylonitrile, poly(methylmethacrylate), or a mixture thereof.

(Electrolyte)

Next, the electrolyte is prepared. The electrolyte may be, for example, a liquid electrolyte, a solid electrolyte, a gel electrolyte, or a combination thereof. The electrolyte is, for example, an organic electrolyte. For example, a lithium salt is dissolved in an organic solvent to prepare the organic electrolyte.

As the organic solvent, any material may be used as long as the material is used as an organic solvent in the art. Examples of the organic solvent include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene

glycol, dimethyl ether, or a mixture thereof.

As the lithium salt, any material may be used as long as the material is used as a lithium salt in the art. The lithium salt includes, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \leq x \leq 20$ and $1 \leq y \leq 20$), LiCl, LiI, or a mixture thereof. A concentration of the lithium salt is, for example, in a range of 0.1 M to 5.0 M.

The lithium salt may include a first lithium salt and a second lithium salt. The electrolyte may include the first lithium salt and the second lithium salt, and thus the ionic conductivity of the electrolyte may be improved.

The first lithium salt and the second lithium salt are each a borate-based lithium salt. The borate-based lithium salt may have improved high-temperature stability as compared to a phosphorous-based lithium salt and may suppress the generation of a hydrofluoric acid (HF). The first lithium salt and the second lithium salt may each include the borate-based lithium salt, and thus the high-temperature cycle characteristics of a lithium battery may be improved.

For example, the first lithium salt and the second lithium salt may each independently be a fluorine-containing borate-based lithium salt. The first lithium salt and the second lithium salt may each include the fluorine-containing borate-based lithium salt, and thus a composition of a solid electrolyte interphase (SEI) layer formed during charging or discharging of a lithium battery may be more effectively modified. For example, when a fluorine (F) content of the SEI layer increases, the structural stability of the SEI layer may increase, and side reactions with an organic solvent may be effectively suppressed. As a result, the reversibility of an electrode reaction of a lithium battery may be improved.

The first lithium salt and the second lithium salt may be, for example, a non-cyclic borate lithium salt and a cyclic borate lithium salt. Since the first lithium salt is a non-cyclic lithium salt, the ionic conductivity of a gel polymer electrolyte may be more effectively increased. Since the second lithium salt is a cyclic lithium salt, the aggregation of anions may increase, which may more effectively participate in modifying the composition of the SEI layer and may improve the high-temperature stability of a gel polymer electrolyte.

When the first lithium salt is not included, the ionic conductivity of a gel polymer electrolyte may be reduced. When the second lithium salt is not included, the structural stability of the SEI layer may be reduced.

The fluorine-containing borate-based lithium salt may include, for example, $LiBF_4$, $LiBF_3(C_2F_5)$, a compound selected from compounds represented by Formulas 1 to 12, or a combination thereof.

Formula 1

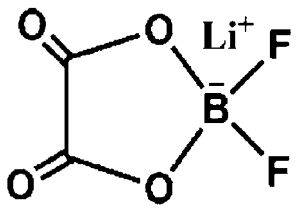

Formula 2

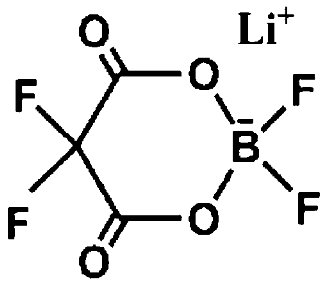

Formula 3

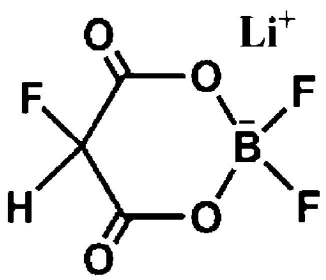

Formula 4

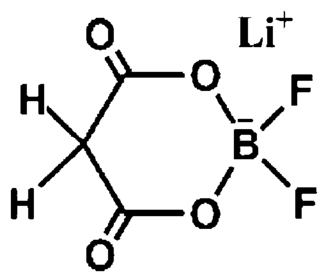

Formula 5

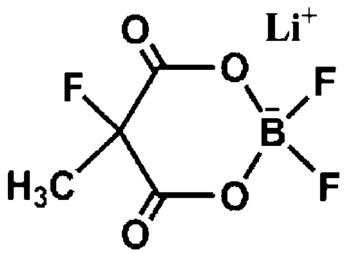

Formula 6

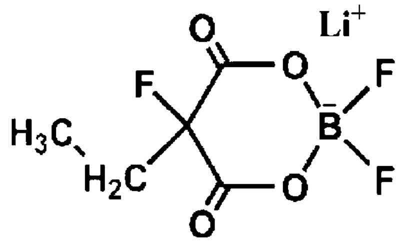

Formula 7

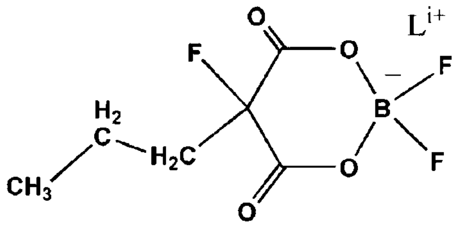

Formula 8

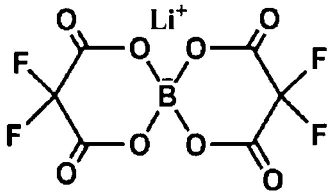

Formula 9

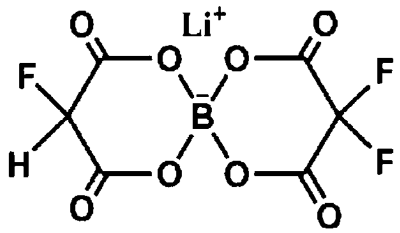

Formula 10

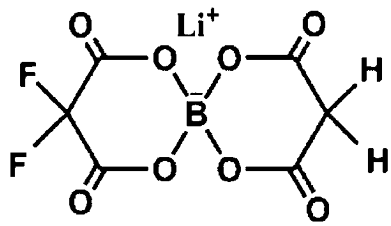

Formula 11

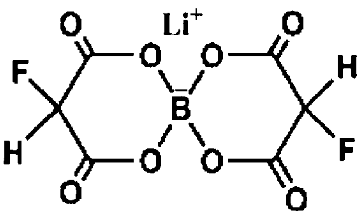

Formula 12

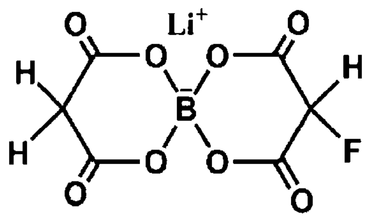

According to an embodiment, the first lithium salt may include, for example, lithium bis(oxalato)borate (LiBOB), and the second lithium salt may include the compound selected from the compounds represented by Formulas 1 to 12, for example, $Li(BF_2(C_2O_4)$ (LiBFOB: lithium difluoro(oxalato)borate).

According to another embodiment, the first lithium salt may include $Li(BF_2(C_2O_4)$ (LiBFOB: lithium difluoro(oxalato)borate), and the second lithium salt may include the compound selected from the compounds represented by Formulas 1 to 12.

According to another embodiment, the first lithium salt may include $LiBF_4$, and the second lithium salt may include the compound selected from the compounds represented by Formulas 1 to 12. The first lithium salt may include $LiBF_4$, and the second lithium salt may include, for example, the compound of Formula 1.

Contents of the first lithium salt and the second lithium salt may each independently be, for example, in a range of

more than 0 M to 1.2 M, 0.1 M to 1.0 M, or 0.4 M to 0.8 M. The first lithium salt and the second lithium salt may each have a content in such a range so that the electrolyte may have excellent ionic conductivity and also a structurally stable SEI layer may be formed.

A content ratio of the first lithium salt to the second lithium salt may be, for example, in a range of 1:9 to 9:1, 3:7 to 7:3, or 4:6 to 6:4. The content ratio of the first lithium salt to the second lithium salt may be in such a range so that the electrolyte may have excellent ionic conductivity and also a structurally stable SEI layer may be formed. The content ratio of the first lithium salt to the second lithium salt may be, for example, a molar ratio.

The solid electrolyte is, for example, an oxide-based solid electrolyte, a sulfide-based solid electrolyte, a polymer-based solid electrolyte, or a combination thereof.

The solid electrolyte is, for example, an oxide-based solid electrolyte. The oxide-based solid electrolyte includes at least one selected from $Li_{1+x+y}Al_xTi_{2-x}Si_yP_{3-y}O_{12}$, wherein 0<x<2 and 0≤y<3, $Li_3PO_4$, $Li_xTi_y(PO_4)_3$, wherein 0<x<2 and 0<y<3, $Li_xAl_yTi_z(PO_4)_3$, wherein 0<x<2, 0<y<1, and 0<z<3, $Li_{1+x+y}(Al, Ga)_x(Ti, Ge)_{2-x}Si_yP_{3-y}O_{12}$, wherein 0≤x≤1 and 0≤y≤1, $Li_xLa_yTiO_3$, wherein 0<x<2 and 0<y<3, $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$, wherein M=Te, Nb, or Zr, and x is an integer from 1 to 10. The solid electrolyte is prepared through sintering or the like. For example, the oxide-based solid electrolyte is a garnet-type solid electrode selected from $Li_7La_3Zr_2O_{12}$ (LLZO) and $Li_{3+x}La_3Zr_{2-a}M_aO_{12}$ (LLZO doped with M), wherein M=Ga, W, Nb, Ta, or Al, x is an integer from 1 to 10, and 0<a<2).

The sulfide-based solid electrolyte may include, for example, lithium sulfide, silicon sulfide, phosphorus sulfide, boron sulfide, or a combination thereof. Sulfide-based solid electrolyte particles may include $Li_2S$, $P_2S_5$, $SiS_2$, $GeS_2$, $B_2S_3$, or a combination thereof. The sulfide-based solid electrolyte particles may include $Li_2S$ or $P_2S_5$. The sulfide-based solid electrolyte particles are known to have higher lithium ion conductivity than other inorganic compounds. For example, the sulfide-based solid electrolyte includes $Li_2S$ and $P_2S_5$. When a sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In addition, an inorganic solid electrolyte, which is prepared by adding $Li_3PO_4$, a halogen, a halogen compound, $Li_{2+2x}Zn_{1x}GeO_4$ ("LISICON"), wherein 0≤x<1, $Li_{3+y}PO_{4-x}N_x$ (LIPON), wherein 0<x<4 and 0<y<3, $Li_{3.25}Ge_{0.25}P_{0.75}S_4$ ("Thio-LISICON"), $Li_2O$-$Al_2O_3$-$TiO_2$-$P_2O_5$ "(LATP"), or the like to $Li_2S$-$P_2S_5$, $SiS_2$, $GeS_2$, $B_2S_3$, or a combination thereof, may be used as the sulfide-based solid electrolyte. Non-limiting examples of the sulfide solid electrolyte material include $Li_2S$-$P_2S_5$; $Li_2S$-$P_2S_5$-LiX, wherein X is a halogen element; $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$, wherein 0<m<10, 0<n<10, and Z=Ge, Zn, or Ga; $Li_2S$-$GeS_2$; $Li_2S$-$SiS_2$-$Li_3PO_4$; and $Li_2S$-$SiS_2$-$Li_pMO_q$, wherein 0<p<10, 0<q<10, and M=P, Si, Ge, B, Al, Ga, or In. In this regard, a sulfide-based solid electrolyte material may be prepared by treating a raw starting material (for example, $Li_2S$ or $P_2S_5$) of the sulfide-based solid electrolyte material through a melt quenching method, a mechanical milling method, or the like. In addition, a calcination process may be performed after the treating. The sulfide-based solid electrolyte may be in an amorphous state, a crystalline state, or a mixture state thereof.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of 25 °C and a pressure of 1 atm. The polymer solid electrolyte may not include, for example, a liquid. The polymer solid electrolyte may include a polymer, and the polymer may include, for example, polyethylene oxide (PEO), PVDF, vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), PTFE, polyethylenedioxythiophene (PEDOT), polypyrrole (PPY), polyacrylonitrile (PAN), polyaniline, poly acetylene, NAFION™, AQUIVION®, FLEMION®, GORE™, ACIPLEX™, MORGANE®-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but one or more embodiments are not limited thereto. Any material may be used as long as the material is used in a polymer electrolyte in the art. As the lithium salt, any material may be used as long as the material may be used as a lithium salt in the art. The lithium salt includes, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number from 1 to 20, LiCl, LiI, or a mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte is, for example, a polymer gel electrolyte. The gel electrolyte may have a gel state without including, for example, a polymer.

The polymer gel electrolyte may include, for example, a liquid electrolyte and a polymer or may include an organic

solvent and a polymer having an ion-conductive functional group. The polymer gel electrolyte may be, for example, a polymer electrolyte that is in a gel state at a temperature of 25 °C and a pressure of 1 atm. The polymer gel electrolyte may have, for example, a gel state without including a liquid. The liquid electrolyte used in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt, an ionic liquid, and an organic solvent. The polymer used in the polymer gel electrolyte may be selected from polymers used in a solid polymer electrolyte. The organic solvent may be selected from organic solvents used in a liquid electrolyte. The lithium salt may be selected from lithium salts used in a polymer solid electrolyte. The ionic liquid refers to a salt in a liquid state at room temperature or a room-temperature molten salt that has a melting point at room temperature or less and consists of only ions. The ionic liquid may include, for example, at least one of compounds including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazol-based cation, and a mixture thereof, and b) at least one anion selected from $BF_4$-, $PF_6$-, $AsF_6$-, $SbF_6$-, $AlCl_4$-, $HSO_4$-, $ClO_4$-, $CH_3SO_3$-, $CF_3CO_2$-, Cl-, Br-, I-, $SO_4$-, $CF_3SO_3$-, $(FSO_2)_2N$-, $(C_2F_5SO_2)_2N$-, $(C_2F_5SO_2)(CF_3SO_2)N$-, and $(CF_3SO_2)_2N$-. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

(Lithium metal battery)

Referring to FIG. 9, a lithium metal battery 1 according to an embodiment includes a cathode 3, an anode 2, and a separator 4. The anode includes the anode according to an embodiment. The cathode 3, the anode 2, and the separator 4 are wound or folded to form a battery structure 7. The formed battery structure 7 is accommodated in a battery case 5. An organic electrolyte is injected into the battery case 5, and the battery case 5 is sealed with a cap assembly 6 to complete the lithium metal battery 1. The battery case 5 has a cylindrical shape, but one or more embodiments are not necessarily limited to such a shape. For example, the battery case 5 has a prismatic shape, a thin film shape, or the like.

Referring to FIG. 10, a lithium metal battery 1 according to an embodiment includes a cathode 3, an anode 2, and a separator 4. The anode 2 includes the anode according to an embodiment. The separator 4 is disposed between the cathode 3 and the anode 2, and the cathode 3, the anode 2, and the separator 4 are wound or folded to form a battery structure 7. The formed battery structure 7 is accommodated in a battery case 5. The lithium metal battery 1 may include an electrode tab 8 serving as an electrical path for guiding a current generated in the battery structure 7 to the outside. An organic electrolyte is injected into the battery case 5, and the battery case 5 is sealed to complete the lithium battery 1. The battery case 5 has a prismatic shape, but one or more embodiments are not necessarily limited to such a shape. For example, the battery case 5 has a cylindrical shape, a thin film shape, and the like.

Referring to FIG. 11, a lithium metal battery 1 according to an embodiment includes a cathode 3, an anode 2, and a separator 4. The anode 2 includes the anode according to an embodiment. The separator 4 is disposed between the cathode 3 and the anode 2 to form a battery structure 7. The battery structure 7 is stacked in a bi-cell structure and then accommodated in a battery case 5. The lithium metal battery 1 may include an electrode tab 8 serving as an electrical path for guiding a current generated in the battery structure 7 to the outside. An organic electrolyte is injected into the battery case 5, and the battery case 5 is sealed to complete the lithium metal battery 1. The battery case 5 has a prismatic shape, but one or more embodiments are not necessarily limited to such a shape. For example, the battery case 5 has a cylindrical shape, a thin film shape, and the like.

A pouch-type lithium metal battery corresponds to a case in which a pouch is used as a battery case in each of the lithium metal batteries of FIGS. 10 and 11. The pouch-type lithium metal battery includes one or more battery structures. A separator is disposed between a cathode and an anode to form the battery structure. After the battery structures are stacked in a bi-cell structure, the battery structures are impregnated with an organic electrolyte, accommodated in a pouch, and sealed to complete the pouch-type lithium metal battery. For example, although not shown in the drawing, the above-described cathode, anode, and separator are simply stacked and accommodated in a pouch in the form of an electrode assembly or are wound or folded into a jelly roll-shaped electrode assembly and then accommodated in a pouch. Subsequently, an organic electrolyte is injected into the pouch, and the pouch is sealed to complete a lithium battery.

The lithium metal battery of the present disclosure has excellent discharge capacity and lifespan characteristics and high energy density and thus is used, for example, in electric vehicles (EVs). For example, the lithium metal battery is used in hybrid vehicles such as plug-in hybrid electric vehicles (PHEVs). In addition, the lithium metal battery is used in fields in which large amounts of power are required to be stored. For example, the lithium metal battery is used in electric bicycles, power tools, or the like.

A plurality of lithium metal batteries are stacked to form a battery module, and a plurality of battery modules form a battery pack. The battery pack may be used in any device requiring high capacity and high output power. For example, the battery pack may be used in laptop computers, smartphones, electric vehicles, and the like. A battery module includes, for example, a plurality of batteries and a frame for holding the plurality of batteries. A battery pack includes, for example, a plurality of battery modules and a busbar for connecting the plurality of battery modules. The battery module and/or the battery pack may further include a cooling device. A plurality of battery packs are adjusted by a battery management system. The battery management system includes a battery pack and a battery controller connected to the battery pack.

A lithium metal battery including a solid electrolyte will be described in more detail below.

(All-solid lithium metal battery)

A lithium metal battery may be, for example, an all-solid lithium metal battery including a solid electrolyte. The all-solid lithium metal battery may include the above-described anode and thus may have improved capacity and excellent lifespan characteristics at the same time.

For example, the all-solid lithium battery is manufactured through the following exemplary method, but one or more embodiments are not necessarily limited thereto. A method is adjusted according to required conditions.

Referring to FIGS. 8 and 9, an all-solid lithium metal battery 1 includes a cathode 10, the anode 20 described above, and a solid electrolyte layer 30 disposed between the cathode 10 and the anode 20. The solid electrolyte layer 30 includes, for example, an inorganic solid electrolyte. The solid electrolyte layer 30 includes, for example, a sulfide-based solid electrolyte or an oxide-based solid electrolyte.

(Anode)

The above-described anode including a lithium metal or a lithium alloy is prepared.

(Cathode)

Referring to FIGS. 12 to 13, the cathode 10 includes a cathode current collector 11 and a cathode active material layer 12 disposed on the cathode current collector. The cathode active material layer 12 includes a cathode active material. For the cathode active material, reference is made to the part of the above-described lithium battery.

The cathode active material layer 12 may further include a solid electrolyte in addition to the cathode active material. The solid electrolyte included in the cathode 10 may be the same as or different from a solid electrolyte included in the solid electrolyte layer 30. For the detailed contents of the solid electrolyte included in the cathode 10, reference is made to the part of the solid electrolyte layer 30. The solid electrolyte used in the cathode active material layer 12 may have a D50 average particle diameter less than that of the solid electrolyte used in the solid electrolyte layer 30. For example, the D50 average particle diameter of the solid electrolyte used in the cathode active material layer 12 may be 90 % or less, 80 % or less, 70 % or less, 60 % or less, 50 % or less, 40 % or less, 30 % or less, or 20 % or less of the D50 average particle diameter of the solid electrolyte used in the solid electrolyte used in the solid electrode layer 30. The D50 average particle diameter of the solid electrolyte used in the cathode active material layer 12 may be, for example, in a range of 0.1 $\mu$m to 2 $\mu$m, 0.2 $\mu$m to 1.5 $\mu$m, or 0.3 $\mu$m to 1.0 $\mu$m. A content of the solid electrolyte included in the cathode active material layer 12 may be in a range of 1 wt% to 15 wt%, 5 wt% to 15 wt%, or 8.0 wt% to 12.0 wt% with respect to the total weight of the cathode active material layer 12.

The cathode active material layer 12 may include a binder. The binder includes, for example, SBR, PTFE, PVDF, PE, or the like, but one or more embodiments are not necessarily limited thereto. Any material may be used as long as the material is used as a binder in the art. A content of the binder included in the cathode active material layer 12 may be, for example, in a range of 0.1 wt% to 5 wt%, 0.5 wt% to 3 wt%, or 1.0 wt% to 2.0 wt% with respect to the total weight of the cathode active material layer 12.

The cathode active material layer 12 may include a conductive material. The conductive material may be, for example, a carbon-based conductive material or a metal-based conductive material. The conductive material includes, for example, graphite, CB, AC, KB, carbon fiber, a carbon tube, a metal powder, or the like, but one or more embodiments are not necessarily limited thereto. Any material may be used as long as the material is used as a conductive material in the art. A content of the conductive material included in the cathode active material layer 12 may be, for example, in a range of 0.1 wt% to 10 wt%, 0.5 wt% to 5 wt%, or 1.0 wt% to 4.0 wt% with respect to the total weight of the cathode active material layer 12. In addition to the above-described cathode active material, solid electrolyte, binder, and conductive material, the cathode active material layer 12 may further include, for example, additives such as a filler, a coating agent, a dispersant, and an ion-conductive adjuvant.

The cathode current collector 11 may include a plate, foil, or the like consisting of, for example, aluminum (Al), indium (In), copper (Cu), magnesium (Mg), stainless steel, titanium (Ti), iron (Fe), cobalt (Co), nickel (Ni), zinc (Zn),

germanium (Ge), lithium (Li), or an alloy thereof. The cathode current collector 11 may be omitted. The cathode current collector 11 may further include a carbon layer disposed on one side or both sides of a metal substrate. Since the carbon layer is additionally disposed on the metal substrate, a metal of the metal substrate may be prevented from being corroded by a solid electrolyte included in a cathode layer, and interface resistance between the cathode active material layer 12 and the cathode current collector 11 may be reduced. A thickness of the carbon layer may be, for example, in a range of 1 μm to 5 μm, 1 μm to 4 μm, or 1 μm to 3 μm. When the carbon layer is excessively thin, it may be difficult to completely block contact between the metal substrate and the solid electrolyte. When the carbon layer is excessively thick, the energy density of an all-solid secondary battery may decrease. The carbon layer may include amorphous carbon, crystalline carbon, or the like. The cathode current collector 11 including the metal substrate and optionally including the carbon layer may have, for example, a thickness of 10 μm to 50 μm, 10 μm to 40 μm, or 10 μm to 30 μm, but one or more embodiments are not necessarily limited to such a range. The thickness of the cathode current collector 11 may be selected according to required characteristics of an all-solid lithium battery.

Although not shown in the drawings, in addition to the cathode current collector 11 and the cathode active material layer 12 disposed on the cathode current collector, the cathode 10 may further include an inactive member disposed on one side of the cathode active material layer 12. An area of the cathode active material layer 12 may be smaller than an area of the solid electrolyte layer 30 in contact with the cathode active material layer 12. The inactive member may be disposed to surround a side of the cathode active material layer 12 to correct an area error between the cathode active material layer 12 and the solid electrolyte layer 30. The inactive member is a member that does not include an electrochemically active material, for example, an electrode active material. The electrode active material is a material that intercalates/deintercalates lithium. The inactive member is a member consisting of a material used in the art other than an electrode active material. The inactive member may surround the side of the cathode active material layer 12 and may be in contact with the solid electrolyte layer 30. The inactive member may surround the side of the cathode active material layer 12 and may be in contact with the solid electrolyte layer 30, thereby effectively suppressing cracks of the solid electrolyte layer 30, which are caused in a portion of the solid electrolyte layer 30, which is not in contact with the cathode active material layer 12, by a pressure difference during a pressing process. A difference between an area of the cathode active material layer 12 and an area of the solid electrolyte layer 30 may be corrected due to an area of the inactive member, thereby effectively suppressing cracks of the solid electrolyte layer 30 caused by a pressure difference during a pressing process. The inactive member may be disposed between the cathode current collector 11 and the solid electrolyte layer 30 which are opposite to each other. The inactive member may serve as a filler filling a space between the cathode current collector 11 and the solid electrolyte layer 30 which are opposite to each other. The inactive member may include at least one selected from a lithium ion insulator and a lithium ion conductor. The inactive member may be an electron insulator. That is, the inactive member may not be an electron conductor. The inactive member may include an organic material, an inorganic material, or an organicinorganic composite material. The organic material may be, for example, a polymer. The inorganic material may be, for example, ceramic such as a metal oxide. The organicinorganic composite material may be a composite of a polymer and a metal oxide. For example, the inactive member may include at least one selected from an insulating polymer, an ion-conductive polymer, an insulating inorganic material, an oxide-based solid electrolyte, and a sulfide-based solid electrolyte. The inactive member may include, for example, an olefin-based polymer such as PP or PE. The inactive member 40 may be, for example, a gasket. A thickness of the inactive member may be the same as or similar to a thickness of the cathode active material layer 12.

The cathode 11 may be impregnated, for example, with a liquid electrolyte. The liquid electrolyte may include a lithium salt and at least one of an ionic liquid and a polymer ionic liquid. The liquid electrolyte may be non-volatile. The ionic liquid refers to a salt in a liquid state at room temperature or a room-temperature molten salt that has a melting point at room temperature or less and consists of only ions. The ionic liquid includes one selected from compounds including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazol-based cation, and a mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The ionic liquid includes, for example, at least one selected from the group consisting of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide. The polymer ionic liquid may include a repeating unit including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazol-based cation, and a mixture thereof, and b) at least one anion selected from $BF_4$-, $PF_6$-, $AsF_6$-, $SbF_6$-, $AlCl_4$-, $HSO_4$-, $ClO_4$-, $CH_3SO_3$-, $CF_3CO_2$-, $(CF_3SO_2)_2N$-, $(FSO_2)_2N$-, Cl-, Br-, I-, $SO_4$-, $CF_3SO_3$-, $(C_2F_5SO_2)_2N$-, $(C_2F_5SO_2)(CF_3SO_2)N$-, $NO_3$-, $Al_2Cl_7$-, $(CF_3SO_2)_3C$-, $(CF_3)_2PF_4$-, $(CF_3)_3PF_3$-, $(CF_3)4PF_2$-, $(CF_3)_5PF$-, $(CF_3)_6P$-, $SF_5CF_2SO_3$-, $SF_5CHFCF_2SO_3$-, $CF_3CF_2(CF_3)_2CO$-, $CF_3SO_2)_2CH$-, $(SF_5)_3C$-, and

$(O(CF_3)_2C_2(CF_3)_2O)_2PO$-. As the lithium salt, any material may be used as long as the material may be used as a lithium salt in the art. The lithium salt includes, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, LiN, $LiN(C_xF_{2x+1}SO2)(C_yF_{2y+1}SO_2)$, wherein x and y are each a natural number, LiCl, LiI, or a mixture thereof. A concentration of the lithium salt included in the liquid electrolyte may be in a range of 0.1 M to 5 M. A content of the liquid electrolyte impregnated into the cathode 10 is in a range of 0 parts by weight to 100 parts by weight, 0 parts by weight to 50 parts by weight, 0 parts by weight to 30 parts by weight, 0 parts by weight to 20 parts by weight, 0 parts by weight to 10 parts by weight, or 0 parts by weight to 5 parts by weight with respect to 100 parts by weight of the cathode active material layer 12 that does not include a liquid electrolyte.

(Solid electrolyte layer)

Referring to FIGS. 12 and 13, the solid electrolyte layer 30 is disposed between the cathode 10 and the anode 20 and includes, for example, a sulfide-based solid electrolyte.

The sulfide-based solid electrolyte may include, for example, at least one selected from $Li_2S$-$P_2S_5$, $Li_2S$-$P_2S_5$-LiX, wherein X is a halogen element, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$, wherein m and n are each a positive number and Z is one of Ge, Zn, and Ga, $Li_2S$-$GeS_2$, $Li_2S$-$SiS_2$-$Li_3PO_4$, $Li_2S$-$SiS_2$-$Li_pMO_q$, wherein p and q are each a positive number and M is one of P, Si, Ge, B, Al, Ga, and In, $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$. For example, the sulfide-based solid electrolyte is prepared by treating a starting material such as $Li_2S$ or $P_2S_5$ through melt quenching or mechanical milling. In addition, after such treating, heat treatment may be performed. A solid electrolyte may be in an amorphous state, a crystalline state, or a mixture state thereof. In addition, the solid electrolyte may be, for example, a material that includes at least sulfur (S), phosphorus (P), and lithium (Li) as constituent elements among the above-described materials of the sulfide-based solid electrolyte. For example, the solid electrolyte may be a material including $Li_2S$-$P_2S_5$. When a material including $Li_2S$-$P_2S_5$ is used as a sulfide-based solid electrolyte material for forming a solid electrolyte, a mixing molar ratio of $Li_2S$ to $P_2S_5$, for example, $Li_2S:P_2S_5$, is in a range of about 50:50 to about 90:10.

The sulfide-based solid electrolyte may include, for example, an argyrodite-type solid electrolyte represented by Formula 13 below:

Formula 13 $$Li^{+}_{12-n-x}A^{n+}X^{2-}_{6-x}Y^{-}_{x}.$$

In Formula 13, A is P, As, Ge, Ga, Sb, Si, Sn, Al, In, Ti, V, Nb, or Ta, X is S, Se, or Te, Y is Cl, Br, I, F, CN, OCN, SCN, or $N_3$, and $1 \leq n \leq 5$, and $0 \leq x \leq 2$. The sulfide-based solid electrolyte may be, for example, an argyrodite-type compound including at least one selected from $Li_{7-x}PS_{6-x}Cl_x$ ($0 \leq x \leq 2$), $Li_{7-x}PS_{6-x}Br_x$ ($0 \leq x \leq 2$), and $Li_{7-x}PS_{6-x}I_x$ ($0 \leq x \leq 2$). The sulfide-based solid electrolyte may be, for example, an argyrodite-type compound including at least one selected from $Li_6PS_5Cl$, $Li_6PS_5Br$, and $Li_6PS_5I$. The argyrodite-type solid electrolyte may have a density of 1.5 g/cc to 2.0 g/cc. Since the argyrodite-type solid electrolyte has a density of 1.5 g/cc or more, the internal resistance of an all-solid secondary battery may be reduced, and Li may be effectively suppressed from penetrating a solid electrolyte layer.

An elastic modulus of the sulfide-based solid electrolyte, that is, a Young's modulus, may be, for example, 35 GPa or less, 30 GPa or less, 27 GPa or less, 25 GPa or less, or 23 GPa or less. The elastic modulus of the sulfide-based solid electrolyte, that is, the Young's modulus, may be, for example, in a range of 10 GPa to 35 GPa, 10 GPa to 30 GPa, 10 GPa to 27 GPa, 10 GPa to 25 GPa, or 10 GPa to 23 GPa. Since the sulfide-based solid electrolyte has an elastic modulus in such a range, a magnitude of a temperature and/or pressure required for sintering is reduced, and thus sintering of the solid electrolyte may be more easily performed.

A D50 average particle diameter of the solid electrolyte used in the solid electrolyte layer 30 may be, for example, in a range of 1 $\mu$m to 10 $\mu$m, 1.5 $\mu$m to 7 $\mu$m, or 2 $\mu$m to 5 $\mu$m.

A content of the sulfide-based solid electrolyte included in the solid electrolyte layer 30 may be, for example, in a range of 97 wt% to 100 wt%, 98 wt% to 99.9 wt%, or 98.5 wt% to 99.0 wt% with respect to the total weight of the solid electrolyte layer 30.

The solid electrolyte layer 30 may further include, for example, a binder. The binder included in the solid electrolyte layer 30 (30a or 30b) includes, for example, SBR, PTFE, PVDF, PE, or the like, but one or more embodiments are not limited thereto. Any material may be used as long as the material is used as a binder in the art. The binder of the solid electrolyte layer 30 may be the same as or different from binders included in the cathode active material layer 12 and an anode active material layer 22.

A content of the binder included in the solid electrolyte layer 30 may be, for example, in a range of 0.1 wt% to 3 wt%, 0.5 wt% to 2 wt%, or 1.0 wt% to 2.0 wt% with respect to the total weight of the solid electrolyte layer 30.

Referring to FIGS. 8 and 9, the all-solid lithium metal battery 1 includes the solid electrolyte layer 30, a cathode layer 10 disposed on one side of the solid electrolyte layer 30, and an anode layer 20 disposed on the other surface of the

solid electrolyte layer 30. The cathode layer 30 includes the cathode active material layer 12 in contact with the solid electrolyte layer 30 and the cathode current collector 11 in contact with the cathode active material layer 12, and the anode layer 20 includes the anode active material layer 22 in contact with the solid electrolyte layer 30 and an anode current collector 21 in contact with the anode active material layer 22. In the all-solid lithium metal battery 1, for example, the cathode active material layer 12 and the anode active material layer 22 are respectively disposed on both sides of the solid electrolyte layer 30, and the cathode current collector 11 and the anode current collector 21 are respectively disposed on the cathode active material layer 12 and the anode active material layer 22 to complete the all-solid lithium metal battery 30. Alternatively, the anode active material layer 22, the solid electrolyte layer 30, the cathode active material layer 12, and the cathode current collector 11 are sequentially stacked on the anode current collector 21 to complete the all-solid lithium metal battery 40.

[Method of preparing anode for lithium metal battery]

According to another embodiment, a method of preparing an anode for a lithium metal battery includes preparing an anode current collector, and forming, on the anode current collector, a first metal-containing coating layer containing a material comprising a first metal and an organic-based material by performing, on the anode current collector, an electroless plating process using a composition comprising a first metal-containing salt and an amine group-containing substance, thereby preparing an anode for a lithium metal battery, wherein an amine group is present on a surface of the organic-based material. A lithium metal battery including the anode prepared through such a method has improved cycle characteristics.

First, the anode current collector is provided. For the anode current collector, reference is made to the part of the above-described anode. For example, copper foil is provided as the anode current collector. Alternatively, a stack in which an anode active material layer is disposed on the anode current collector is provided. A method of arranging the anode active material layer on the anode current collector is not particularly limited. For example, a lithium metal layer may be disposed on a metal substrate through sputtering or the like. Alternatively, for example, lithium foil may be disposed on a metal substrate and rolled to prepare a copper foil/lithium foil stack. Alternatively, a stack in which a lithium metal layer is stacked on copper foil may be commercially obtained and used. Alternatively, a composition including a lithium powder and a binder may be applied onto a metal substrate and dried to prepare a stack. For the lithium powder and the binder, reference is made to the part of the above-described anode.

Next, the first metal-containing coating layer is provided on the anode current collector or the anode active material layer.

The first metal-containing coating layer contains the material including the first metal and the organic-based material, and the amine group is present on the organic-based material. The first metal-containing coating layer is formed by performing the electroless plating process using the composition including the first metal-containing salt and the amine group-containing substance.

In the composition, the amine group-containing substance is ethylenediamine, hydrazine, an ethylenediaminetetraacetic acid, methylamine, diethylamine, monoethylamine, trimethylamine, ethylenediamine, aniline, pyridine, or a combination thereof. The amine group-containing substance may serve as a chelating agent. A content of the amine group-containing substance in the composition is in a range of 0.2 parts by weight to 1.2 parts by weight, 0.3 parts by weight to 1.1 parts by weight, or 0.5 parts by weight to 1.0 part by weight with respect to 100 parts by weight of the composition.

The first metal-containing salt may include a nitrate, a sulfate, an oxalate, or a combination thereof which contains the first metal, and for example, may include at least one selected from silver nitrate, bismuth nitrate, tin nitrate, zinc nitrate, lead nitrate, palladium nitrate, platinum nitrate, antimony nitrate, rhodium nitrate, nickel nitrate, cobalt nitrate, zinc (Zn) nitrate, ruthenium (Ru) nitrate, copper (Cu) nitrate, silicon (Si) nitrate, chromium (Cr) nitrate, and manganese (Mn) nitrate.

The total content of the first metal-containing salt and the amine group-containing substance in the composition is maintained in a range of 1 mM to 1 M. The first metal-containing salt may be provided in the form of an aqueous solution.

Electroless plating is a method of plating a subject to be plated through a chemical reaction without using electricity and is a spontaneous process in which, by using electrons released when the first metal-containing salt contained in a plating solution is oxidized on a metal surface, metal ions are reduced to form a metal film.

A composition for the electroless plating process is prepared by mixing the first metal-containing salt and the amine group-containing substance.

A concentration of the first metal-containing salt is in a range of 0.5 g/l to 5 g/l.

The amine group-containing substance is used as a complexing agent, and the complexing agent adjusts a plating speed and prevents spontaneous decomposition in plating, thereby providing a composition with excellent solution stability. Ammonia water or the like may be further used as a complexing agent. A concentration of the complexing agent is in a range of 1.0 g/l to 10 g/l.

The electroless plating process is performed in a temperature range of 20 °C to 60 °C and a pH range of 9.0 to 13.5.

In the composition, a content of the amine group-containing substance is in a range of 80 parts by weight to 400 parts by weight with respect to 100 parts by weight of the first metal-containing salt. When the content of the amine group-containing substance is in the above range, lithium deposition may be more uniformly performed on the anode current collector so that dendrite formation may be effectively suppressed.
Vanillin is further added to the composition. A content of vanillin is 300 parts by weight or less, for example, in a range of 0.1 parts by weight to 300 parts by weight, with respect to 100 parts by weight of the first metal-containing salt. When the content of vanillin is in the above range, the surface stabilization effect of the first metal-containing material may be excellent, thereby manufacturing a lithium metal battery with an improved cycle lifespan.
After the preparing of the anode current collector, the method may further include forming an anode active material layer.
The present inventive concept will be described in more detail through the following Examples and Comparative Examples. However, Examples are for illustrative purposes only, and the scope of the present inventive concept is not limited by Examples.

Example 1

An ethylenediamine aqueous solution was added to a 0.01 M silver nitrate ($AgNO_3$) solution and mixed at a temperature of 30 °C for 60 minutes to obtain a composition which was a plating solution.
The ethylenediamine aqueous solution was added such that a content of ethylenediamine in the composition was 180 parts by weight with respect to 100 parts by weight of silver nitrate. A pH of the composition was adjusted to about 11 by using a sodium hydroxide aqueous solution.
Cu foil (thickness: 10 μm) was immersed in the composition for 1 minute to prepare an anode including a silver-containing coating layer on the Cu foil. Here, the silver-containing coating layer contained silver and an organic-based material. The organic-based material here includes ethylenediamine, a residue of ethylenediamine, some electroless reaction products, an electroless reaction by-product, or a combination thereof. A content of silver in the silver-containing coating layer is 99 parts by weight with respect to 100 parts by weight of the silver-containing coating layer.

Example 2

An anode including a silver-containing coating layer was prepared in the same manner as in Example 1, except that when a composition was prepared, 0.02 M $AgNO_3$ was used instead of 0.01 M $AgNO_3$.

Example 3

An anode including a silver-containing coating layer was prepared in the same manner as in Example 1, except that when a composition was prepared, 0.05 M $AgNO_3$ was used instead of 0.01 M $AgNO_3$.

Example 4

An anode including a silver-containing coating layer was prepared in the same manner as in Example 1, except that when a composition was prepared, a content of ethylenediamine was changed to 90 parts by weight with respect to 100 parts by weight of silver nitrate.

Example 5

An anode including a silver-containing coating layer was prepared in the same manner as in Example 1, except that vanillin was further added when a composition was prepared.
In the composition, a content of vanillin was adjusted to 5 parts by weight with respect to 100 parts by weight of silver nitrate.
An organic-based material includes ethylenediamine, vanillin, a residue thereof, some electroless reaction reactants, an electroless reaction by-product, or a combination thereof. A content of silver in the silver-containing coating layer is 99 parts by weight with respect to 100 parts by weight of the silver-containing coating layer.

Comparative Example 1 (Bare Cu)

Bare Cu foil (thickness: 10 μm) was used as an anode current collector.

Comparative Example 2 (Carbon coating on Cu)

Denka black and PVDF were mixed at a weight ratio of 9:1 and applied onto copper foil to form a carbon coating layer on the Cu foil.

Comparative Example 3 (Cu surface coated with Ag through sputtering in dry manner)

An anode was prepared by sputtering silver on 10 μm thick Cu foil to form a silver layer with a thickness of 500 nm.

(Manufacturing of lithium metal battery)

Manufacturing Example 1

(Preparation of cathode)

After a $Li_{1.04}Ni_{0.8}Co_{0.1}Al_{0.1}O_2$ powder and a carbon conductive material (Super-P manufactured by Timcal Ltd.) were uniformly mixed at a weight ratio of 90:5, a PVDF binder solution was added thereto to prepare a cathode active material layer slurry such that a weight ratio of active material:carbon-based conductive material:binder was 90:5:5.

The prepared cathode active material layer slurry was applied onto an aluminum substrate having a thickness of 15 μm by using a doctor blade, dried under reduced pressure at a temperature of 120 °C, and then rolled by using a roll press to form a form of a sheet, thereby preparing a cathode.

(Manufacturing of coin cell)

A PP separator (Celgard 3510) was disposed between the cathode prepared as described above and the anode prepared according to Example 1, and an electrolyte was injected to manufacture a coin cell.

A solution in which 0.6 M lithium bis(oxalato)borate (LiBOB) and 0.6 M $Li(BF_2(C_2O_4)$ (LiBFOB: lithium difluoro(oxalato)borate) were dissolved in diethyl carbonate (DEC)+fluoroethylene carbonate (FEC) (volume ratio of 1:2) was used as an electrolyte.

Manufacturing Examples 2 to 5

Lithium metal batteries were manufactured in the same manner as in Manufacturing Example 1, except that the anodes prepared according to Examples 2 to 5 were used instead of the anode prepared according to Example 1.

Comparative Manufacturing Examples 1 to 3

Lithium metal batteries were manufactured in the same manner as in Manufacturing Example 1, except that the anodes of Comparative Examples 2 and 3 were used instead of the anode of Example 1.

Evaluation Example 1: X-ray diffraction analysis

X-ray diffraction (XRD) analysis was performed on anode coating films obtained according to Example 2 and Comparative Examples 1 and 3. The XRD analysis was performed by using X'pert PRO MPD manufactured by PANalytical B.V. The XRD analysis results are shown in FIG. 4.

Referring to FIG. 4, unlike the anode of Comparative Example 1, in the anode prepared in Comparative Example 3, a peak of CuO which was a by-reaction product was confirmed during a sputtering process. In the anode prepared in Example 2, as shown in FIG. 4, other peaks other than peaks related to Ag and Cu were not observed.

Evaluation Example 2: XPS analysis

XPS analysis was performed on the anodes obtained according to Example 2, Example 5, and Comparative Examples 1 and 3. The XPS analysis was performed by using ESCALAB 250XI manufactured by Thermo Fisher Scientific Inc.. Analysis results are shown in FIGS. 3A and 3B. FIG. 3A shows XPS analysis results of Ag3d, and FIG. 3B shows XPS analysis results of N1s. FIG. 3C shows XPS analysis results of C1s.

Referring to FIG. 3A, a Ag peak was not confirmed in the anode of Comparative Example 1, and a Ag peak was equally confirmed in the anodes of Comparative Example 3, Example 2, and Example 5 so that it was seen that a silver coating layer was equally formed.

As shown in FIG. 3B, a $C\text{-}NH_2$ amine group peak was confirmed in Example 2 and Example 5, and it was confirmed that an amine additive was involved in surface coating. A $C\text{-}NH_2$ peak (first peak) obtained through X-ray spectroscopy analysis of the coating layer is present at a binding energy of 397 eV to 403 eV, and a full width at half maximum of the peak is in a range of 2 eV to 3 eV. In addition, an intensity ratio of a Ag-N peak (second peak) and the $C\text{-}NH_2$ peak (first peak) appearing at the binding energy of 398 eV to 401 eV is in a range of 1:4 to 1:6.

Referring to FIG. 3C, unlike Comparative Example 1 and Comparative Example 3, a CN peak and a O-C=O peak appeared in Example 2 and Example 5 so that it was seen that an organic material including an amine group was formed.

Evaluation Example 3: Scanning electron microscope (SEM) Analysis

SEM analysis was performed on surfaces of the anodes of the lithium metal batteries of Manufacturing Example 1 and Manufacturing Example 2, which employed the anodes prepared according to Example 1 and Comparative Example 1. Analysis results are shown in FIGS. 5A and 5B. FIG. 5A is a SEM image of the anode of Example 1, and FIG. 5B is a SEM image of the anode of Comparative Example 1.

As shown in FIG. 5B, it was seen that many dendrites were formed in a scale shape on the surface of the anode of Comparative Example 1. In comparison, as shown in FIG. 5A, it was confirmed that dendrite formation on the surface of the anode prepared in Example 1 was decreased.

Evaluation Example 4: Overvoltage Evaluation

In the lithium metal batteries of Manufacturing Example 1 and Comparative Manufacturing Example 1, which employed the anodes of Example 1 and Comparative Example 1, a voltage change according to capacity was investigated to evaluate overvoltage characteristics according to the following method. Evaluation results are shown in FIG. 6.

At a temperature of 25 °C, constant current discharging was performed at a current of 1 mA by using a Li metal and each of the anodes used in Example 1 and Comparative Example 1.

Referring to FIG. 6, as compared to the anode of Comparative Example 1, an overvoltage was not applied to the anode of Example 1, and thus it was confirmed that degradation of battery performance was prevented and stability during battery driving was secured.

Evaluation Example 5: Lifespan characteristics

The charge/discharge characteristics of the lithium metal batteries of Manufacturing Example 1 and Comparative Manufacturing Example 1, which employed the anodes of Example 1 and Comparative Example 1, were evaluated under the following conditions.

The lithium metal batteries were charged at a constant current rate of 0.1 C at a temperature of 25 °C until a voltage reached 4.2 V (vs. Li), and then, in a constant voltage mode, while 4.2 V was maintained, the charging was cut-off at a current rate of 0.05 C. Subsequently, the lithium metal batteries were discharged at a constant current rate of 0.1 C until the voltage reached 3.0 V (vs. Li) during discharging (formation cycle).

The lithium batteries subjected to the formation cycle were charged at a constant current rate of 0.2 C at a temperature of 25 °C until the voltage reached 4.2 V (vs. Li), and then, in a constant voltage mode, while 4.2 V was maintained, the charging was cut-off at a current rate of 0.05 C. Subsequently, the lithium metal batteries were discharged at a constant current rate of 0.2 C until the voltage reached 3.0 V (vs. Li) during discharging ($1^{st}$ cycle). Such a cycle was repeated under the same conditions up to a $150^{th}$ cycle.

The lithium metal batteries were rested for 10 minutes after every charging/discharging cycle. Some of charging/discharging test results at room temperature are shown in FIG. 7. A capacity retention rate is defined by Equation 1 below.

$$\text{Capacity retention rate (\%)} = [\text{discharge capacity at } 200^{th} \text{ cycle/discharge capacity at } 1^{st} \text{ cycle}] \times 100 \qquad \text{Equation 1}$$

As shown in FIG. 7, the capacity retention rate of the lithium battery of Example 1 was improved as compared to the lithium battery of Comparative Example 1.

The improved capacity retention rate was determined to be due to the fact that a silver layer was uniformly formed on a copper current collector by using ethylenediamine which was an amine group-containing substance, and the uniformly formed silver layer effectively served as a lithium deposition inducing layer, thereby allowing lithium deposition to be uniformly performed and preventing dendrite growth to improve lifespan characteristics.

In comparison, the lithium battery of Comparative Example 1, in which a silver-containing coating layer was not formed on a copper current collector, showed reduced lifespan characteristics.

Evaluation Example 6: Cycle lifespan evaluation

Coin half-cells were manufactured by using lithium metal electrodes and the anodes prepared according to Examples 1 to 3 and Comparative Examples 1 to 3, and a cycle lifespan was evaluated by investigating a voltage change over time in the coin half-cells.

The changes were investigated, and the cycle lifespan was evaluated and shown in Table 1 and FIG. 8. The cycle lifespan is a time it takes for a voltage to exceed 0.1 V.

[Table 1]

| Classification | Sample name | Cycle lifespan (Hr) |
|---|---|---|
| Example 1 | Ag 1 | 152 Hr |
| Example 2 | Ag 2 | 175 Hr |
| Example 3 | Ag 5 | 128 Hr |
| Comparative Example 1 | Cu | 81 Hr |
| Comparative Example 2 | Carbon | 58 Hr |
| Comparative Example 3 | Ag Sputter (500nm) | 119 Hr |

As shown in Table 1, it was seen that the cycle lifespan of the coin half-cells of Examples 1 to 3 was considerably improved as compared to Comparative Example 1-3. These results are because the coin half-cells of Examples 1 to 3 included an anode having a first metal coating layer containing silver and amorphous carbon, and an amine group was present on the amorphous carbon so that lithium was uniformly deposited on an anode current collector to suppress dendrite formation and improve the cycle lifespan.

While exemplary embodiments have been described in detail with reference to the accompanying drawings, the present inventive concept is not limited to the embodiments. It is obvious to those skilled in the art to which the present inventive concept belongs that various changes and modifications are conceivable within the scope of the technical idea described in the claims, and those are understood as naturally belonging to the technical scope of the present inventive concept.

## Claims

**1.** An anode for a lithium metal battery, the anode comprising:

an anode current collector; and
a first metal-containing coating layer,
wherein the first metal-containing coating layer contains a material comprising an organic-based material and a first metal capable of forming an alloy or compound with lithium, and
an amine group is present on a surface of the organic-based material.

**2.** The anode of claim 1, wherein the first metal is at least one selected from silver (Ag), gold (Au), bismuth (Bi), tin (Sn), zinc (Zn), lead (Pb), palladium (Pd), platinum (Pt), antimony (Sb), rhodium (Rh), nickel (Ni), cobalt (Co), zinc (Zn), ruthenium (Ru), copper (Cu), silicon (Si), chromium (Cr), and manganese (Mn).

**3.** The anode of claim 1, wherein the amine group is a functional group derived from ethylenediamine, hydrazine, an ethylenediaminetetraacetic acid, methylamine, diethylamine, monoethylamine, trimethylamine, ethylenediamine, aniline, pyridine, or a combination thereof.

**4.** The anode of claim 1, wherein a first peak which is a $C-NH_2$ peak obtained through X-ray spectroscopy analysis of the first metal-containing coating layer is present at a binding energy of 397 eV to 403 eV, and
a full width at half maximum of the first peak is in a range of 2 eV to 3 eV.

**5.** The anode of claim 1, wherein an intensity ratio of a second peak and a first peak which is a $C-NH_2$ peak is in a range of 1:4 to 1:6, wherein the second peak and the first peak are obtained through X-ray spectroscopy analysis of the first metal-containing coating layer and appear at a binding energy of 397 eV to 403 eV.

6. The anode of claim 1, wherein the organic-based material is a by-product of an electroless plating reaction of a composition containing a first metal-containing salt and an amine group-containing substance.

7. The anode of claim 1, wherein a content of the first metal in the first metal-containing coating layer is in a range of 95 parts by weight to 99.9 parts by weight with respect to 100 parts by weight of a total weight of the first metal-containing coating layer.

8. The anode of claim 1, wherein a thickness of the first metal-containing coating layer is in a range of 1 μm to 80 μm.

9. The anode of claim 1, further comprising an anode active material layer between the anode current collector and the first metal-containing coating layer, wherein a thickness of the anode active material layer is in a range of 0.1 μm to 80 μm.

10. The anode of claim 9, wherein the anode active material layer comprises lithium metal foil, lithium metal powder, lithium alloy foil, lithium alloy powder, or a combination thereof.

11. The anode of claim 10, wherein the lithium alloy contains lithium and a second metal, and
the second metal is indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, bismuth, tantalum, hafnium, barium, vanadium, strontium, lanthanum, or a combination thereof.

12. The anode of claim 1, wherein the material comprising the first metal and the organic-based material is an electroless plating product of a composition containing a first metal salt and an amine group-containing substance.

13. The anode of claim 12, wherein the composition comprises vanillin.

14. A lithium metal battery comprising:

the anode of any one of claims 1 to 13;
a cathode; and
an electrolyte between the anode and the cathode.

15. The lithium metal battery of claim 14, wherein the cathode comprises a cathode current collector, the anode comprises an anode current collector,

at least one of the cathode current collector and the anode current collector comprises a base film and a metal layer disposed on one side or both sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

16. The lithium metal battery of claim 14, wherein the electrolyte is a liquid electrolyte, a solid electrolyte, a gel electrolyte, or a combination thereof, the solid electrolyte comprises an oxide-based solid electrolyte, a sulfide-based solid electrolyte, a polymer solid electrolyte, or a combination thereof, and
the gel electrolyte comprises a polymer gel electrolyte.

17. A method of preparing an anode for a lithium metal battery, the method comprising:

preparing an anode current collector; and
forming, on the anode current collector, a first metal-containing coating layer containing a material comprising a first metal and an organic-based material by performing, on the anode current collector, an electroless plating process using a composition comprising a first metal-containing salt and an amine group-containing substance, thereby preparing the anode for a lithium metal battery of claim 1,
wherein an amine group is present on a surface of the organic-based material.

**18.** The method of claim 17, wherein, in the composition comprising the first metal-containing salt and the amine group-containing substance, the amine group-containing substance is ethylenediamine, hydrazine, ethylenediaminetetraacetic acid, or a combination thereof, and
the first metal-containing salt is at least one selected from silver nitrate, bismuth nitrate, tin nitrate, zinc nitrate, lead nitrate, palladium nitrate, platinum nitrate, antimony nitrate, rhodium nitrate, nickel nitrate, cobalt nitrate, zinc nitrate (Zn), ruthenium (Ru) nitrate, copper (Cu) nitrate, silicon (Si) nitrate, chromium (Cr) nitrate, and manganese (Mn) nitrate.

**19.** The method of claim 17, wherein vanillin is further added to the composition comprising the first metal-containing salt and the amine group-containing substance.

**20.** The method of claim 17, further comprising, after the preparing of the anode current collector, forming an anode active material layer.

FIG. 1

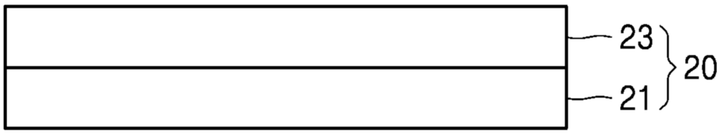


FIG. 2

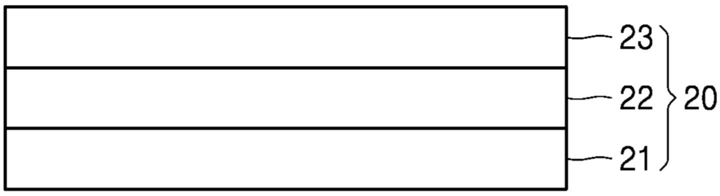

# FIG. 3A

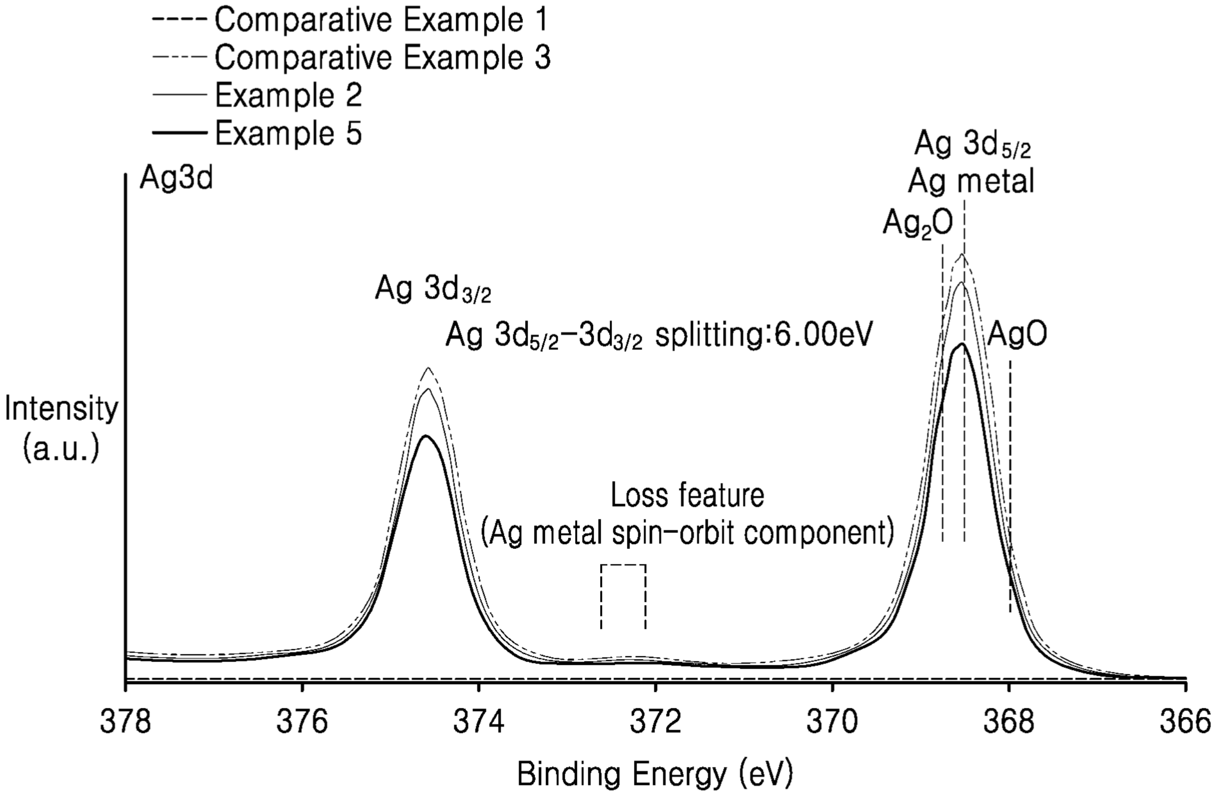
Comparative Example 1
Comparative Example 3
Example 2
Example 5
Ag3d
Intensity (a.u.)
Ag 3d$_{3/2}$
Ag 3d$_{5/2}$–3d$_{3/2}$ splitting:6.00eV
Ag 3d$_{5/2}$
Ag metal
$Ag_2O$
AgO
Loss feature
(Ag metal spin–orbit component)
378
376
374
372
370
368
366
Binding Energy (eV)

FIG. 3B

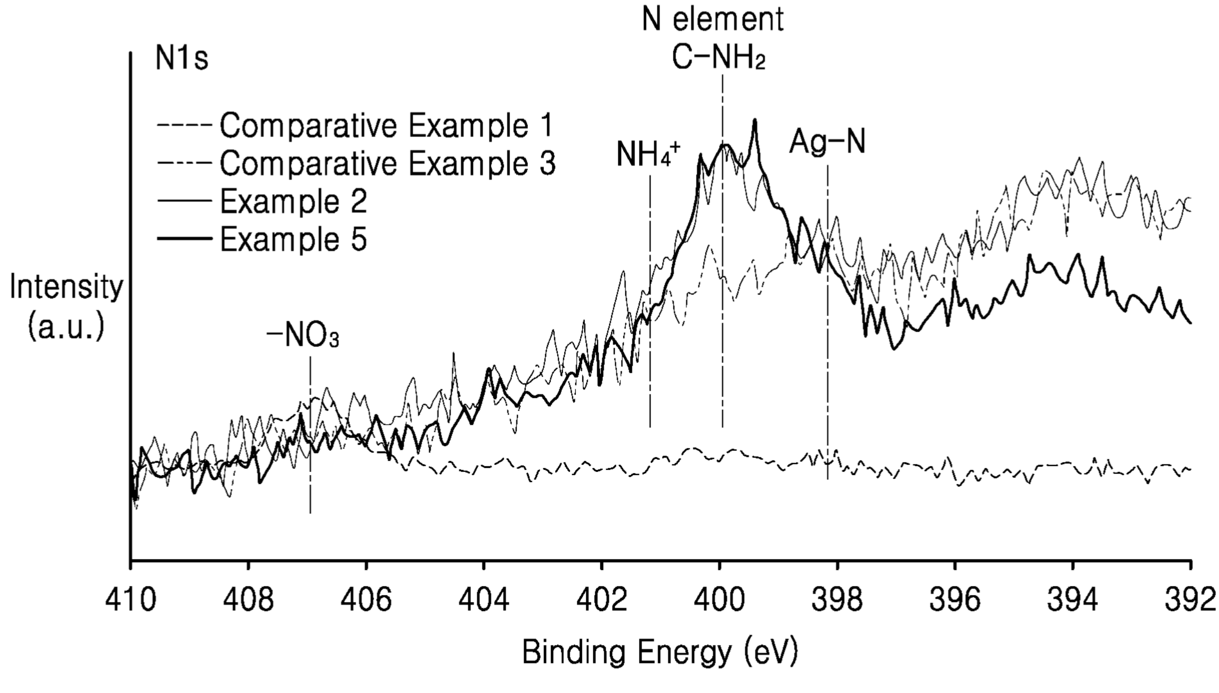
N1s
Comparative Example 1
Comparative Example 3
Example 2
Example 5
N element
C-NH2
NH4+
Ag-N
-NO3
Intensity
(a.u.)
410
408
406
404
402
400
398
396
394
392
Binding Energy (eV)

# FIG. 3C

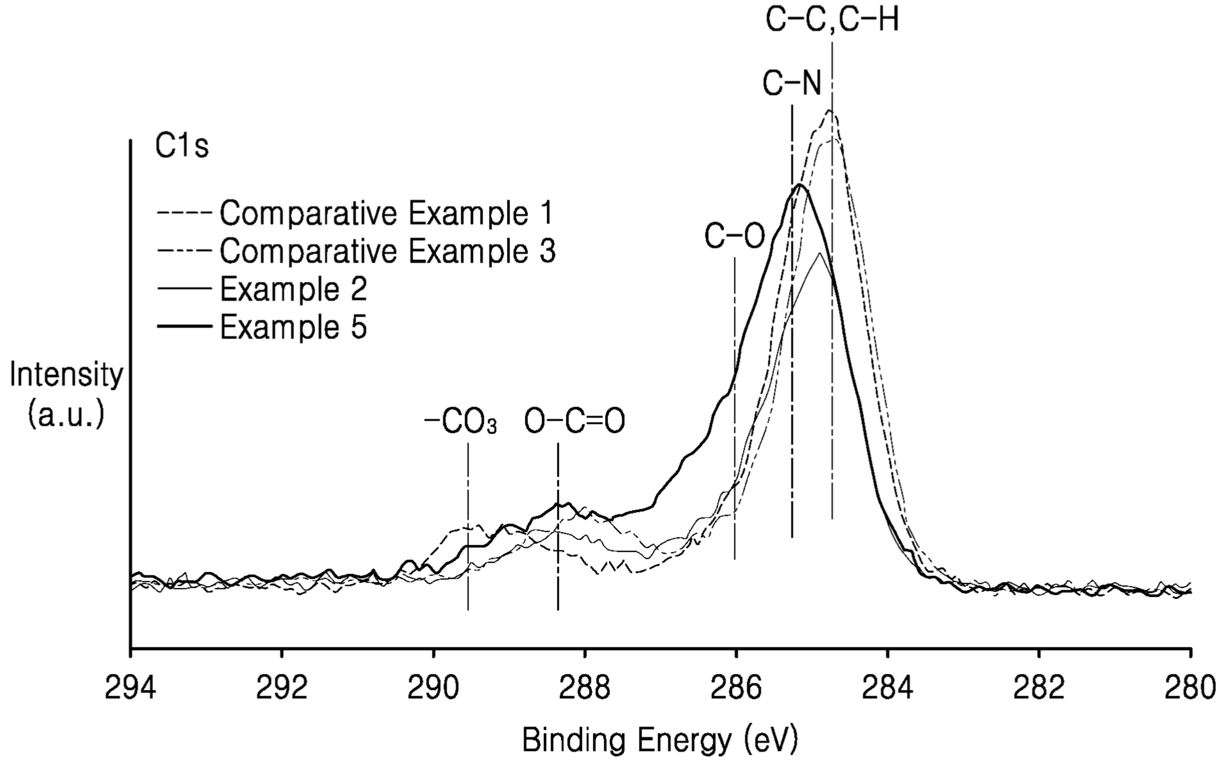
C1s
Comparative Example 1
Comparative Example 3
Example 2
Example 5
C-C,C-H
C-N
C-O
-CO3
O-C=O
Intensity (a.u.)
294
292
290
288
286
284
282
280
Binding Energy (eV)

FIG. 4

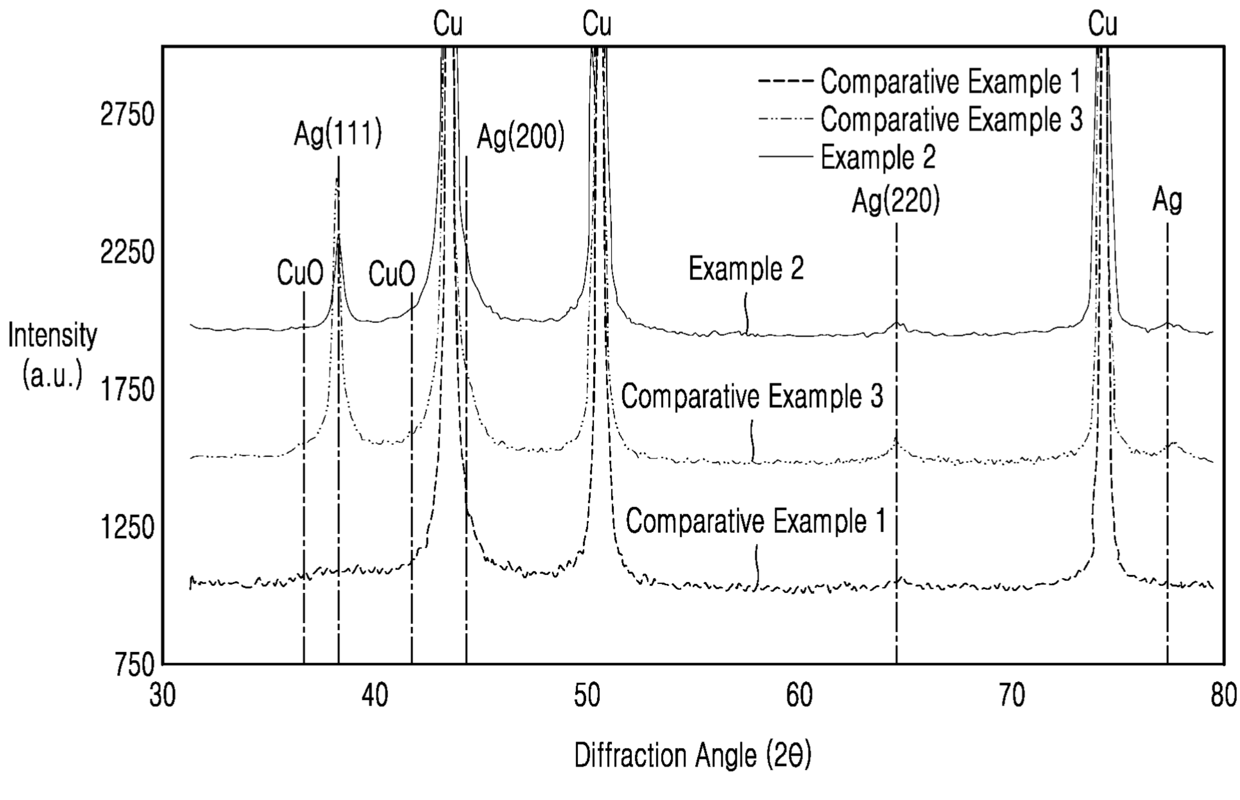
Cu
Cu
Cu
Comparative Example 1
Comparative Example 3
Example 2
2750
2250
1750
1250
750
Ag(111)
Ag(200)
Ag(220)
Ag
CuO
CuO
Example 2
Comparative Example 3
Comparative Example 1
Intensity
(a.u.)
30
40
50
60
70
80
Diffraction Angle (2θ)

FIG. 5A

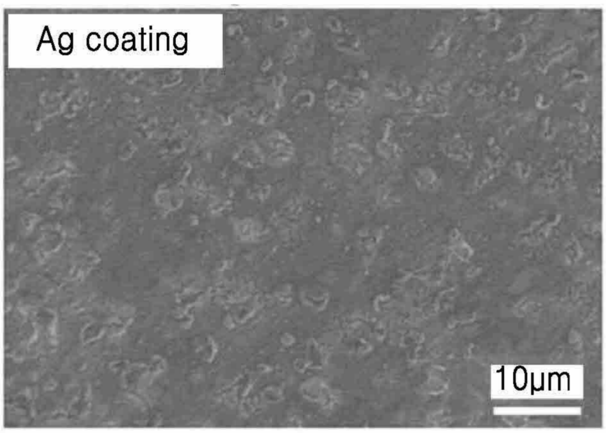


FIG. 5B

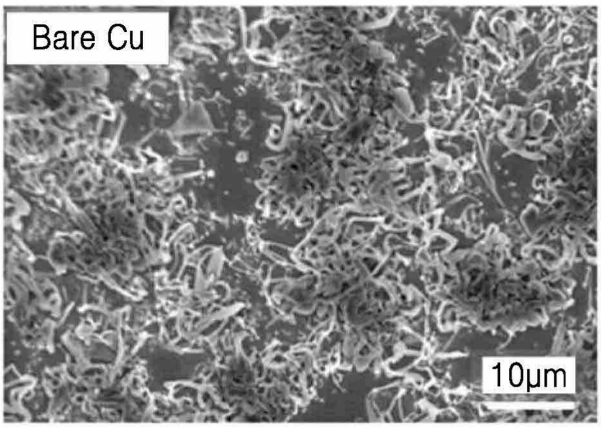

FIG. 6

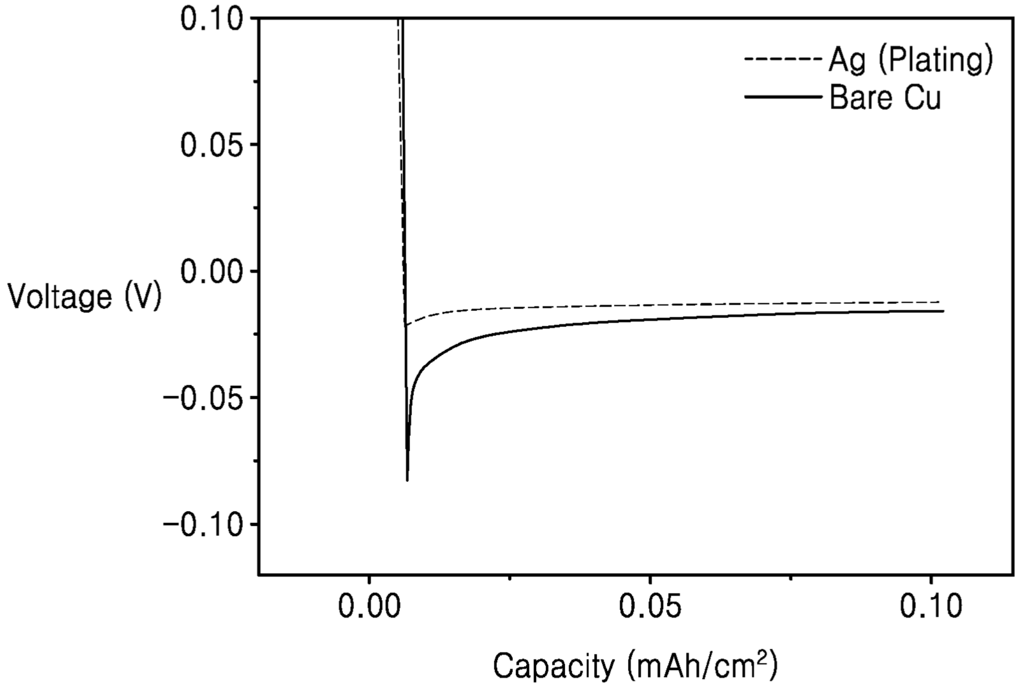
0.10
0.05
0.00
−0.05
−0.10
Voltage (V)
Ag (Plating)
Bare Cu
0.00
0.05
0.10
Capacity (mAh/cm2)

FIG. 7

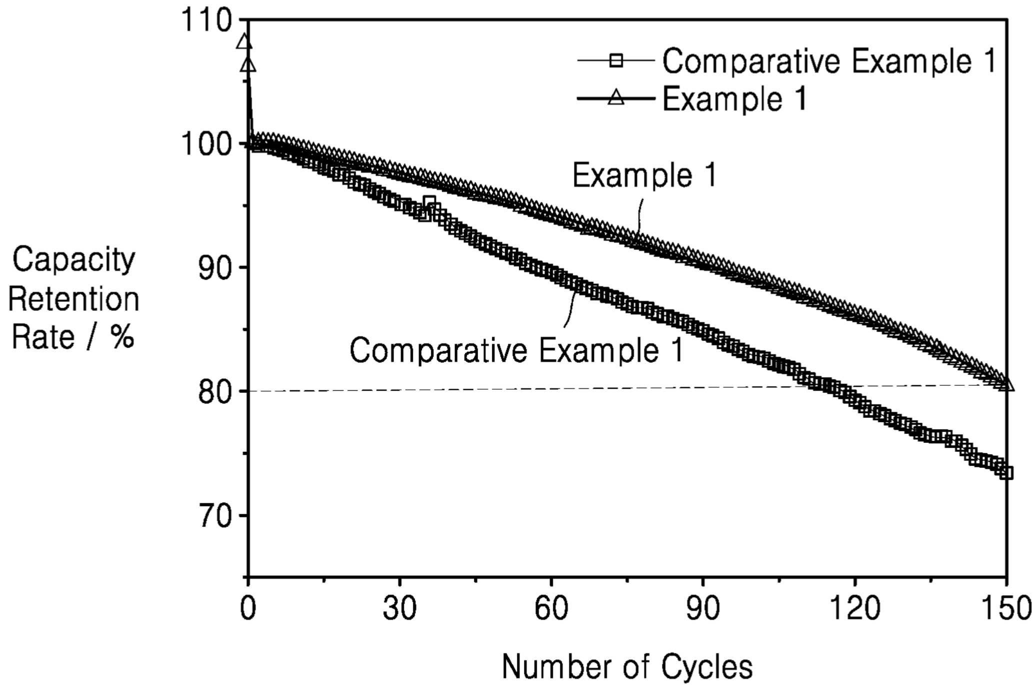
110
100
90
80
70
Capacity
Retention
Rate / %
Comparative Example 1
Example 1
Example 1
Comparative Example 1
0
30
60
90
120
150
Number of Cycles

FIG. 8

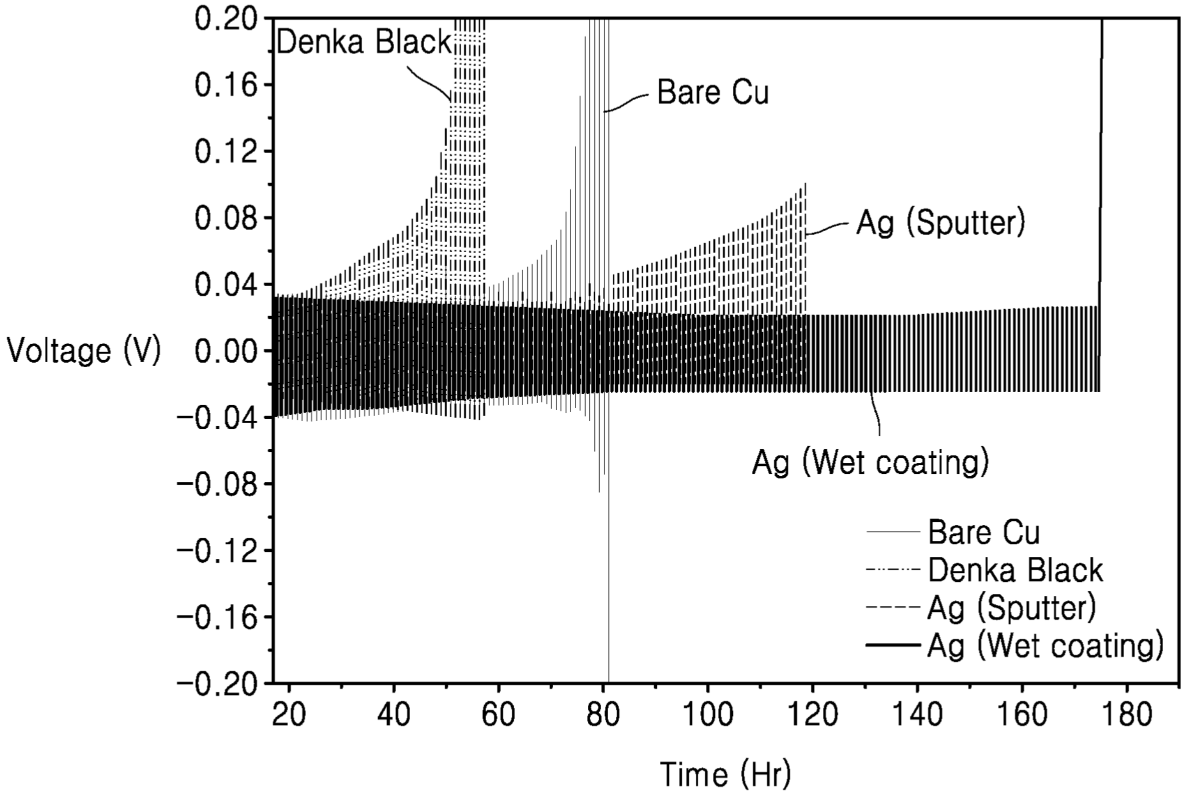
0.20
0.16
0.12
0.08
0.04
0.00
−0.04
−0.08
−0.12
−0.16
−0.20
Voltage (V)
20
40
60
80
100
120
140
160
180
Time (Hr)
Denka Black
Bare Cu
Ag (Sputter)
Ag (Wet coating)
Bare Cu
Denka Black
Ag (Sputter)
Ag (Wet coating)

FIG. 9

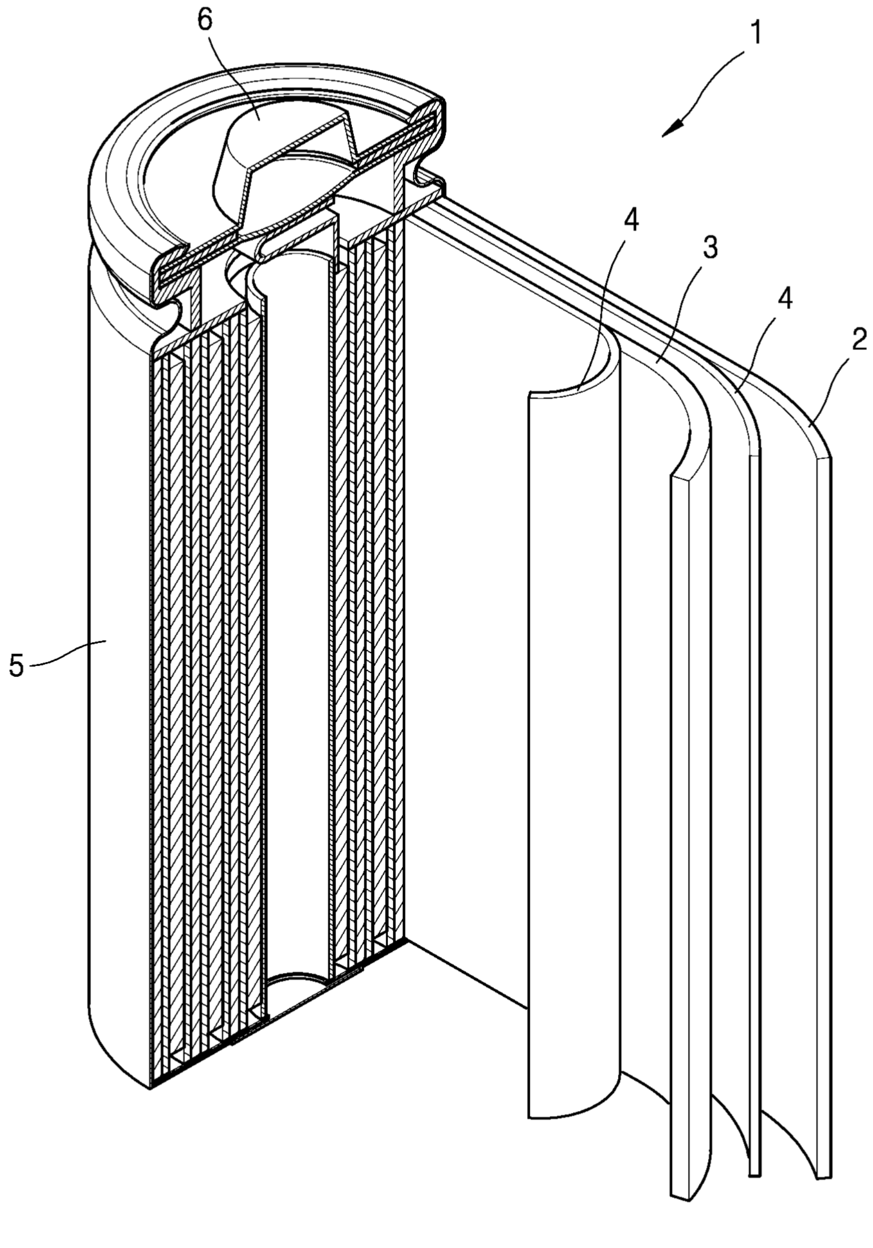

FIG. 10

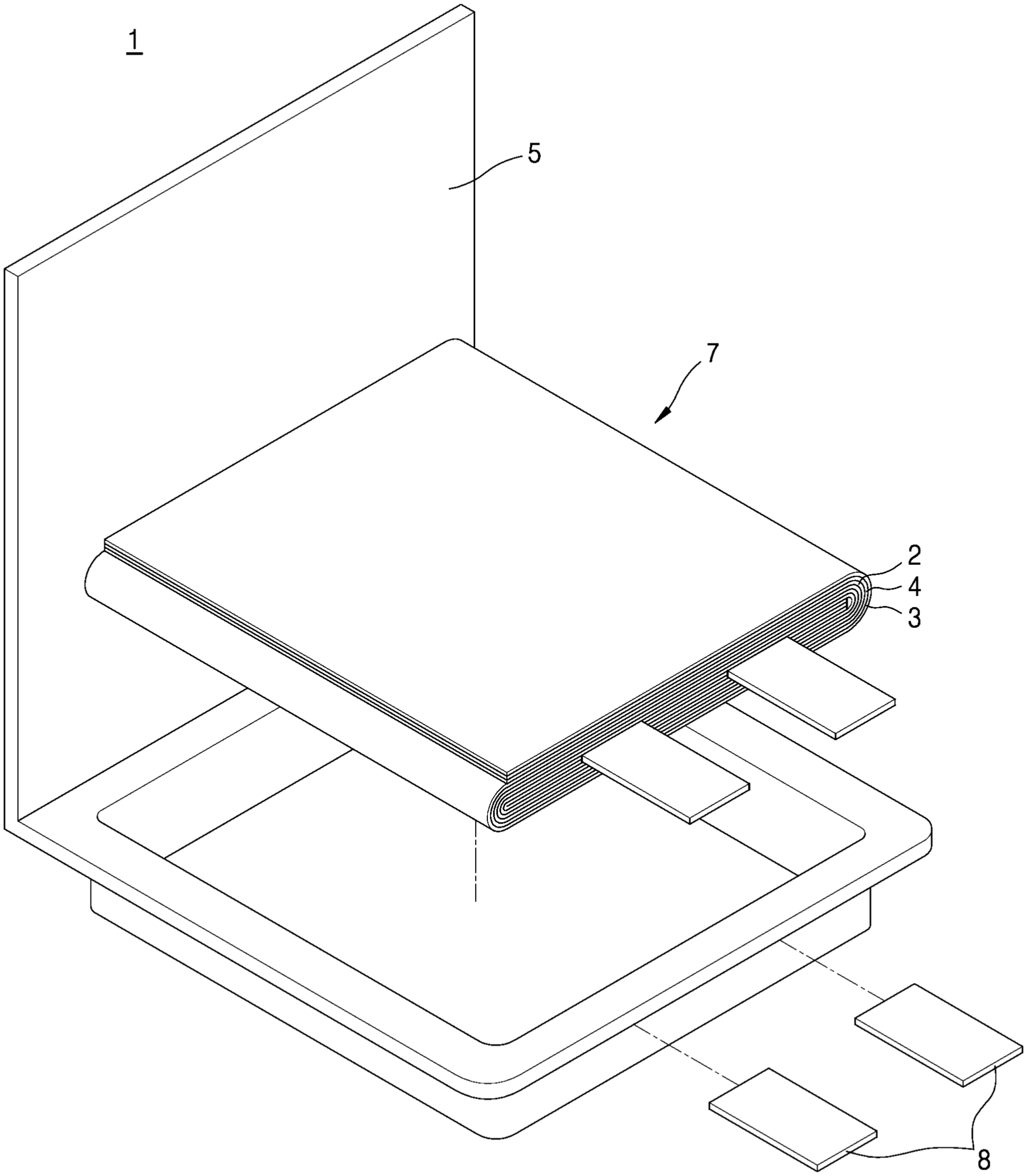

FIG. 11

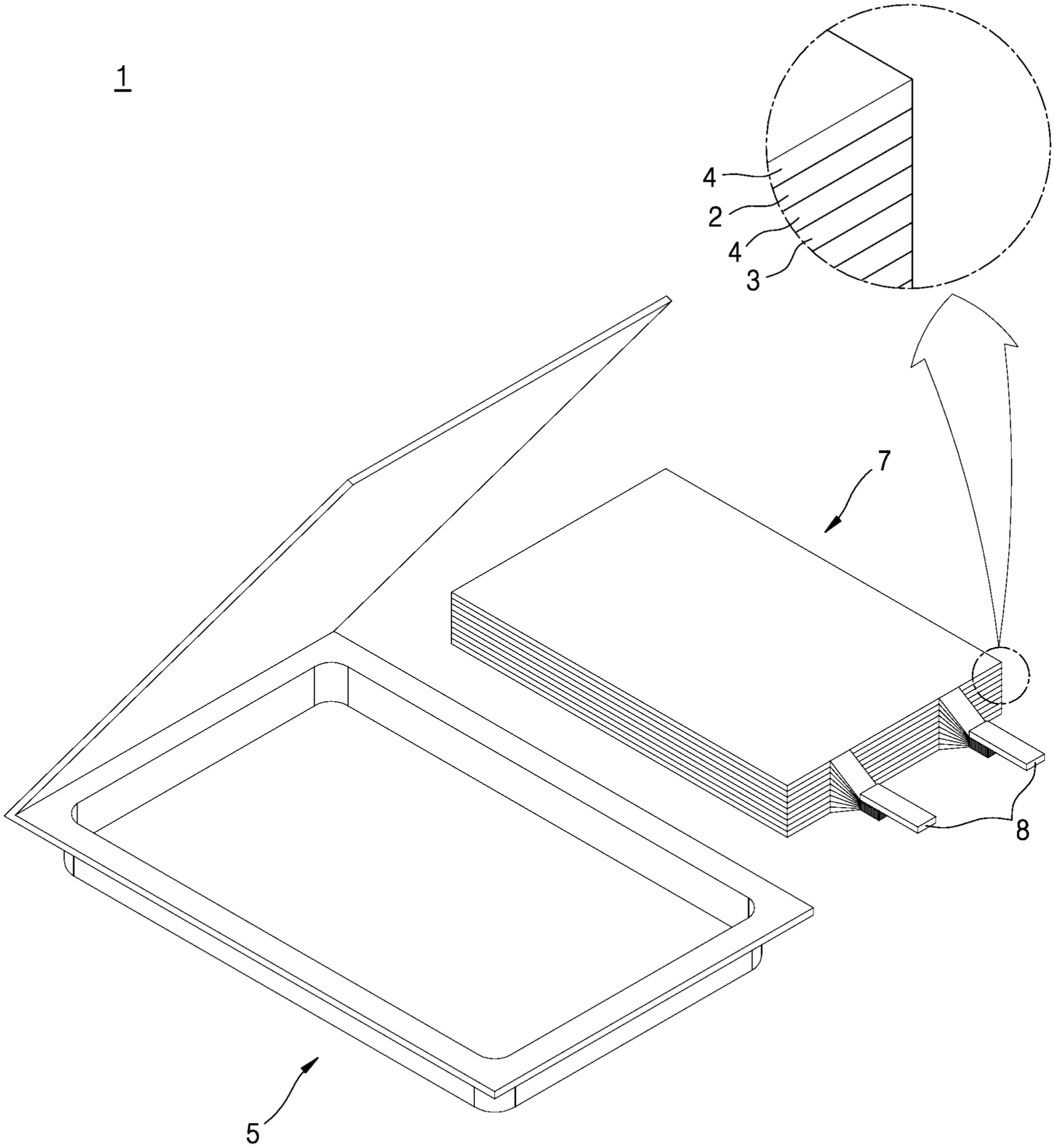

FIG. 12

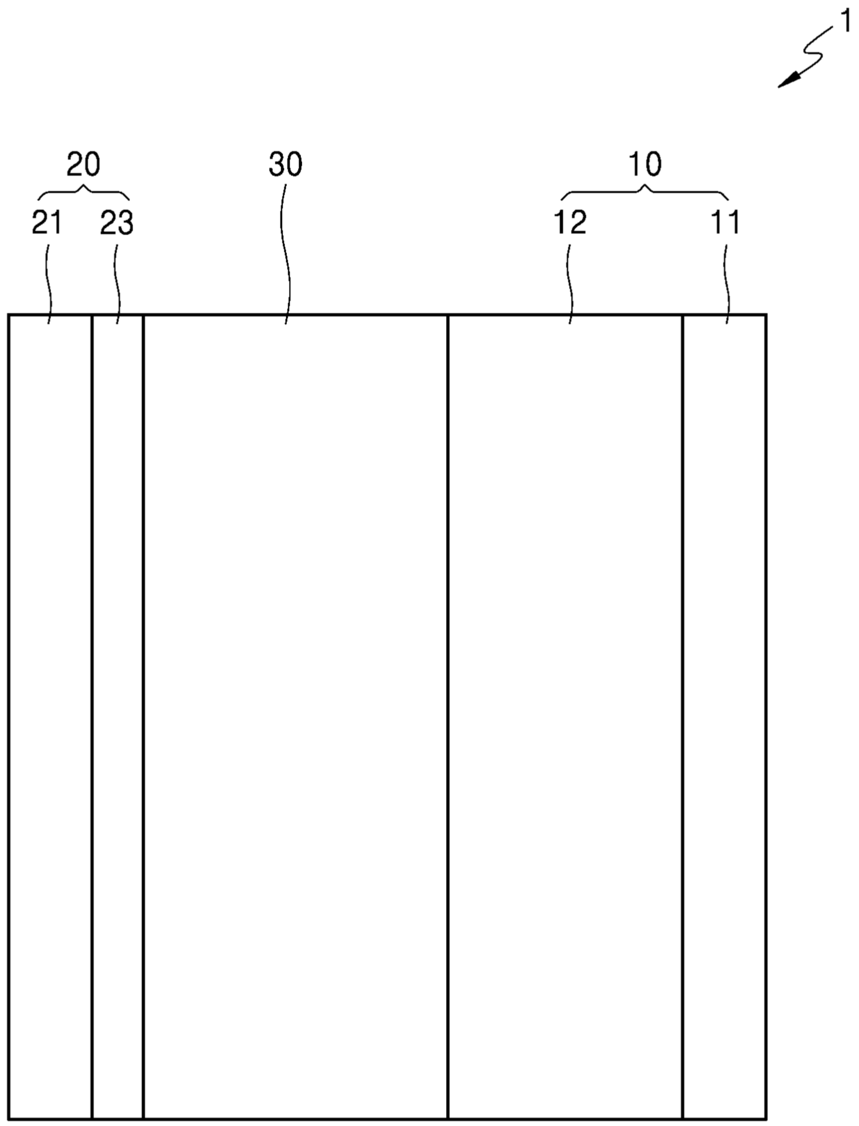

FIG. 13

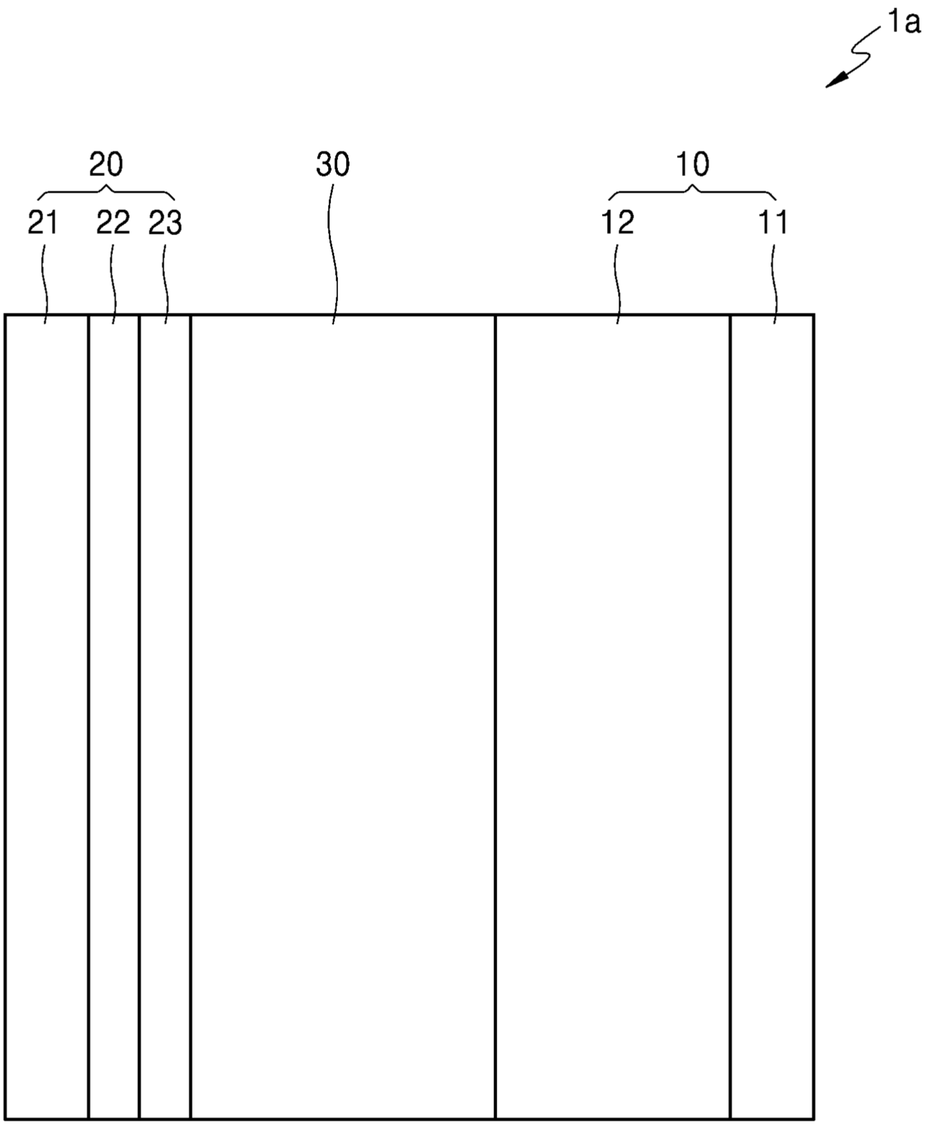

# INTERNATIONAL SEARCH REPORT

International application No.
**PCT/KR2024/003727**

## A. CLASSIFICATION OF SUBJECT MATTER

**H01M 4/134**(2010.01)i; **H01M 4/1395**(2010.01)i; **H01M 4/38**(2006.01)i; **H01M 4/62**(2006.01)i; **H01M 4/04**(2006.01)i; **H01M 4/66**(2006.01)i; **H01M 10/0585**(2010.01)i; **H01M 10/052**(2010.01)i; **H01M 4/02**(2006.01)i

According to International Patent Classification (IPC) or to both national classification and IPC

## B. FIELDS SEARCHED

Minimum documentation searched (classification system followed by classification symbols)

H01M 4/134(2010.01); H01M 10/0525(2010.01); H01M 4/13(2010.01); H01M 4/50(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬금속전지(lithium metal battery), 음극 집전체(anode current collector), 코팅층(coated layer), 아민기(amine group)

## C. DOCUMENTS CONSIDERED TO BE RELEVANT

| Category* | Citation of document, with indication, where appropriate, of the relevant passages | Relevant to claim No. |
|---|---|---|
| A | KR 10-2015-0099649 A (INDUSTRY-ACADEMIC COOPERATION FOUNDATION OF SUNCHON NATIONAL UNIVERSITY et al.) 01 September 2015 (2015-09-01) See claims 1 and 12. | 1-20 |
| A | KR 10-2014-0071872 A (SAMSUNG SDI CO., LTD.) 12 June 2014 (2014-06-12) See claims 1, 4-8, 13 and 16. | 1-20 |
| A | JEONG, H. et al. A review on current collector coating methods for next-generation batteries. Chemical Engineering Journal. 2022, vol. 446, thesis no. 136860, pp. 1-19. See entire document. | 1-20 |
| A | LI, N. et al. Rational engineering of anode current collector for dendrite-free lithium deposition: strategy, application, and perspective. Frontiers in Chemistry. 2022, vol. 10, thesis no. 884308, pp. 1-8. See entire document. | 1-20 |
| A | KR 10-2013-0077540 A (SAMSUNG ELECTRO-MECHANICS CO., LTD.) 09 July 2013 (2013-07-09) See entire document. | 1-20 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 July 2024** | **03 July 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/003727**

| Patent document cited in search report | Publication date (day/month/year) | Patent family member(s) | Publication date (day/month/year) |
|---|---|---|---|
| KR 10-2015-0099649 A | 01 September 2015 | KR 10-1589034 B1 | 28 January 2016 |
| KR 10-2014-0071872 A | 12 June 2014 | CN 103855402 A | 11 June 2014 |
| | | CN 103855402 B | 29 September 2017 |
| | | EP 2741352 A2 | 11 June 2014 |
| | | EP 2741352 A3 | 14 October 2015 |
| | | EP 2741352 B1 | 02 November 2016 |
| | | JP 2014-110234 A | 12 June 2014 |
| | | JP 6226355 B2 | 08 November 2017 |
| | | KR 10-1815710 B1 | 05 January 2018 |
| | | US 2014-0154562 A1 | 05 June 2014 |
| | | US 9437872 B2 | 06 September 2016 |
| KR 10-2013-0077540 A | 09 July 2013 | None | |

Form PCT/ISA/210 (patent family annex) (July 2022)